(19) Europäisches Patentamt
European Patent Office
Office européen des brevets

(11) EP 4 023 702 A1

(12) **EUROPEAN PATENT APPLICATION**

(43) Date of publication:
**06.07.2022 Bulletin 2022/27**

(21) Application number: **20217673.1**

(22) Date of filing: **29.12.2020**

(51) International Patent Classification (IPC):
***C08J 7/12*** *(2006.01)* ***D06P 5/20*** *(2006.01)*
***B29B 17/02*** *(2006.01)* ***C08J 11/04*** *(2006.01)*

(52) Cooperative Patent Classification (CPC):
**C08J 7/123; B29B 17/02; C08J 11/06; D06P 5/22;**
C08J 2323/06; C08J 2423/08; C08J 2433/10;
C08J 2467/04

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Smart Coloring GmbH**
**52074 Aachen (DE)**

(72) Inventor: **ROBERTZ, Bernd**
**52074 Aachen (DE)**

(74) Representative: **Michalski Hüttermann & Partner**
**Patentanwälte mbB**
**Kaistraße 16A**
**40221 Düsseldorf (DE)**

(54) **METHOD FOR STABILIZING A DYE IN A COLORED PLASTIC ARTICLE AND METHOD FOR DECOLORING THE COLORED ARTICLE**

(57) The present invention is directed to a method for stabilizing a dye in a colored plastic article, wherein the method comprises the steps:
a) providing the colored plastic article by
i) exposing a surface of an uncolored plastic article to a coloring bath comprising the dye or
ii) by using a color masterbatch or liquid color comprising the dye in a plastic forming process, wherein the colored plastic article comprises a plastic basis material, and the dye,
- wherein the plastic basis material is based on a polar polymer or on a polymer blend, wherein the polymer blend comprises at least 0.25 wt.-% of the polar polymer, wherein the polar polymer has a molecular weight Mw $\geq$ 1000 g/mol and has at least 5 wt.-% of heteroatoms based on the molecular weight of the polar polymer,
and wherein heteroatoms are any atoms except C and H atoms; or
- wherein the plastic basis material is based on a further polymer blend, wherein the further polymer blend comprises at least 99.75 wt.-% of a non-polar polymer and a carrier; wherein the non-polar polymer has a molecular weight Mw $\geq$ 1000 g/mol and has less than 5 wt.-% of heteroatoms based on the molecular weight of the non-polar polymer;
wherein the carrier is a polar compound or a blend comprising at least 10 wt.-% of a polar-compound, and wherein the polar-compound has a molecular weight Mw < 1000 g/mol and has at least 5 wt.-% of heteroatoms based on the molecular weight of the polar compound;
- wherein the dye has a molecular weight Mw in the range of about $\geq$ 250 g/mol to about $\leq$ 750 g/mol;
b) exposing a colored surface of the colored plastic article to ionizing radiation, such that a depth-dose distribution in the colored surface comprises a maximum radiation dose at a depth of > 0 $\mu$m to $\leq$ 10 $\mu$m of the colored surface.

EP 4 023 702 A1

## Description

The present invention relates to a method for stabilizing a dye in a colored plastic article, to an article produced by said method and to a method for decoloring said article.

## BACKGROUND OF THE INVENTION

Plastic articles, such as packaging and containers, are widely used in daily life, since they are easy to manufacture, rather inexpensive and lightweight. It is often desired that the plastic article has a specific color.

The coloring of plastics can be achieved by using color master batches, colored micro granules, so-called dry liquid colors or liquid colors. Colored plastic components can for example be produced from color master batch blended into a polymer prior to molding or extruding. The selection of the specific coloring method may vary based on economics, secondary operations and specific requirements of the end application.

The coloring of plastics and in particular of plastic articles can also be achieved by coloring the uncolored but already formed plastic article in a coloring bath. In this case the coloring of the plastic article may not be homogeneously distributed in the whole volume of the plastic but may be confined to outer layers of the plastic article that have come into contact with the coloring bath.

Independent of the coloring process, the selection of the pigments and/or dyes depends not only on the desired color, but also on the plastic, on application, and the associated requirements, such as the use of the plastic article. In sensitive areas, such as food packaging or packaging for medicinal applications, contamination of the filling goods by a substance in the packaging must be avoided at all efforts. Furthermore, also a contamination of a user of the plastic package by a colored outer surface of the plastic package must be avoided. Hence, it is important that the dyes and/or pigments used, are immobilized and do not migrate from the plastic into the filling good or in an outer environment of the plastic article under the conditions in which the plastic article is used. For dyes, which are predominantly present in the colored plastic in a molecularly solved state, the prevention of migration is generally achieved by using dyes with a high molecular weight.

Even though dyes with a high molecular weight help producing highly color stable plastic articles, they are a disadvantage in the recycling process of the plastic article, as they cannot be removed from the plastic during mechanical recycling. The plastic articles may only be recycled at great expense by separating the articles in an additional sorting process according to their color, after having separated the articles according to the kind of plastic/polymer, in order to achieve high quality colored recycled material. When colorful plastics are mixed during regranulation, recyclates with undesirable color tones (brown, grey, black) result, so that these recyclates can only be used to a very limited extent. Alternatively, in the recycling process the dyes within the plastic may be chemically modified for example by strong oxidation or reduction processes such that the dyes lose their chromophoric property. However, the destroyed dye compounds remain in the plastic and thus limit the use of the recylate. Furthermore, the oxidation or reduction agents are very aggressive and need to be used in high amounts, which is not environmentally friendly. Although it is possible to dissolve the plastics and dyes in chemical recycling by dissolving the colored plastic in suitable solvents, the effort involved is considerable and the use of organic solvents contradicts the idea of sustainability.

In other words, environmentally friendly and high-quality recycling depends on dyes that can easily be removed from the colored plastic article. This goal may be achieved by dyes with a low molecular weight, and especially with dyes which are molecularly dissolved and/or very finely dispersed in the plastic. However, since these dyes tend to migrate in the plastic even to the point of efflorescence from the plastic, their use for producing plastic articles and especially for producing food packages or packages for medicinal application is very limited.

Accordingly, there is a need to enhance the color stability of plastic articles produced with dyes with a low molecular weight, in order to provide plastics article that are easily recyclable and still usable in sensitive areas, where a high color stability is needed.

## SUMMARY OF THE INVENTION

It is an object of the invention to provide a method for stabilizing a dye in a colored plastic article, wherein the method comprises the steps:

a) providing the colored plastic article by

i) exposing a surface of an uncolored plastic article to a coloring bath comprising the dye or
ii) by using a color masterbatch or a liquid color comprising the dye in a plastic forming process,

wherein the colored plastic article comprises a plastic basis material, and the dye,

- wherein the plastic basis material is based on a polar polymer or on a polymer blend,

  wherein the polymer blend comprises at least 0.25 wt.-% of the polar polymer,
  wherein the polar polymer has a molecular weight Mw $\geq$ 1000 g/mol and has at least 5 wt.-% of heteroatoms based on the molecular weight of the polar polymer, and wherein heteroatoms are any atoms except C and H atoms; or

- wherein the plastic basis material is based on a further polymer blend, wherein the further polymer blend comprises at least 99.75 wt.-% of a non-polar polymer and a carrier;

  wherein the non-polar polymer has a molecular weight Mw $\geq$ 1000 g/mol and has less than 5 wt.-% of heteroatoms based on the molecular weight of the non-polar polymer;
  wherein the carrier is a polar compound or a blend comprising at least 10 wt.-% of a polar-compound, and wherein the polar-compound has a molecular weight Mw < 1000 g/mol and has at least 5 wt.-% of heteroatoms based on the molecular weight of the polar compound;

- wherein the dye has a molecular weight Mw in the range of about $\geq$ 250 g/mol to about $\leq$ 750 g/mol;

b) exposing a colored surface of the colored plastic article to ionizing radiation, such that a depth-dose distribution in the colored surface comprises a maximum radiation dose at a depth of > 0 $\mu$m to $\leq$ 10 $\mu$m of the colored surface.

The basic idea of the invention is to use ionizing radiation in order to decrease the mobility of the dye in the plastic article such that the color stability of the colored plastic article is enhanced under use conditions. By exposing the colored surface of the colored plastic article to the ionizing radiation a layer of the colored surface, which is exposed to the ionizing radiation, is modified, such that the migration capability of the dye is strongly reduced. The modified layer forms an efficient migration barrier for the dye and enhances the color stability of the colored plastic article. In other words, by exposing the colored surface to the ionizing radiation the migration barrier is generated. It is believed that exposing the colored surface of the colored plastic article to the ionizing radiation leads to a crosslinking of polymer bonds in the plastic basis material, thus generating the migration barrier and enhancing the color stability of the plastic article by hindering the tendency of the dye to migrate. By exposing the colored surface of the colored plastic article to the ionizing radiation, such that the depth-dose distribution in the colored surface comprises its maximum radiation dose at a depth of > 0 $\mu$m to $\leq$ 10 $\mu$m, preferably > 1 $\mu$m to $\leq$ 10 $\mu$m, more preferably > 2 $\mu$m $\leq$ 10 $\mu$m the migration barrier is generated around and/or within this region and thus the migration barrier is confined to a layer, that lies close to the surface of the colored plastic article. In other words, the plastic basis material in a depth below around 20 $\mu$m from the surface that is exposed to the ionizing radiation is not modified, when the colored surface of the colored plastic article is exposed to the ionizing radiation. The method has the advantage that low molecular dyes can be used for coloring the uncolored plastic article, thus making an easy and environment-friendly recycling of the plastic article possible, but still ensuring that the colored plastic article has a high color stability. The method basically comprises two steps, i.e. a) providing the colored plastic article and b) exposing a colored surface of the colored plastic article to the ionizing radiation such that the depth-dose distribution in the colored surface comprises its maximum radiation dose at a depth of > 0 $\mu$m to $\leq$ 10 $\mu$m of the colored surface. Preferably the migration barrier is generated by exposing the colored surface of the colored plastic article to an electron beam of an electron accelerator. Several parameters of the electron accelerator and the irradiated material influence the generation of the migration barrier, among these parameters are a radiation dose and an acceleration voltage of the electron accelerator which influences the speed of the electrons. Preferably exposing the colored surface of the colored plastic article to the electron beam such that the depth-dose distribution in the colored surface comprises its maximum radiation dose at a depth of > 0 $\mu$m to $\leq$ 10 $\mu$m of the colored surface comprises a high radiation dose, preferably in the order of 10 kGy to 300 kGy, and slow electrons produced by an acceleration voltage in the order of 25 kV to 250 kV. Since the colored surface of the plastic article is exposed to the ionizing radiation in an independent, distinct step, the method can be used subsequent to standard plastic forming processes used in industry without interfering with the plastic forming process. Furthermore, in case the colored plastic article is provided by exposing a surface of an uncolored plastic article to a coloring bath comprising the dye, it is even possible to use uncolored but formed plastic articles as primary material.

Furthermore, it is an object of the invention to provide a method for decolorizing the colored plastic article comprising the steps of

- shredding the colored plastic article to a granulate and/or powder,
- exposing the granulate and/or powder to a decoloring bath for at least partial decoloration,
- heating the at least partly decolored granulate and/or powder above a melting temperature $T_m$ of the plastic basis

material for providing a polymer melt, and

- filtering off solid parts in the polymer melt by a melt filter.

As already mentioned, the method for stabilizing the dye in the colored plastic article has the advantage that low molecular dyes are used for coloring the uncolored plastic article, thus making an easy and environmentally friendly recycling of the plastic article possible. When exposing the colored surface of the colored plastic article to the ionizing radiation, preferably only a thin migration barrier is generated, that does not extend below around 20 $\mu$m from the surface. Thus, after the plastic article is shredded to a granulate, the thin migration barrier allows for a decoloring process, wherein the majority of the dye migrates out of the colored plastic article. Only the dye within the thin migration barrier may not be able to migrate out of the granulate and thus these parts of the granulates may only be partly decolored. However, since the physical and especially the thermal properties of the irradiated plastic basis materials, which forms the migration barrier is different to the non-irradiated plastic basis material, the partly non-decolored parts of the granulates can be separated by a heating- and filtering process. Thus, the method for stabilizing the dye in the colored plastic article and the method for decolorizing the colored plastic article allow to achieve an environmentally friendly recycling of the colored plastic article where preferably at least 90 % of the dye and preferably at least 85 % of the plastic basis material can be recovered and preferably reused for coloring of uncolored plastic articles and for producing further plastic articles, respectively. Furthermore, the recycling does not rely on dissolving the plastic basis material in an organic solvent, but rather on a migration process of the dye out of the plastic basis material.

As already mentioned, in the recycling of the colored plastic article, the partly decolored granulates are heated above the melting temperature $T_m$ of the plastic basis material for providing the polymer melt. In this regard and according to a preferred embodiment of the invention, the plastic basis material is a thermoplastic and/or a thermoplastic elastomer. A thermoplastic is a plastic polymer material that becomes pliable or moldable at a certain elevated temperature and solidifies upon cooling. Above its glass transition temperature $T_g$ and below its melting point $T_m$, the physical properties of the thermoplastic change drastically without an associated phase change. Even though thermoplastic elastomers show properties of elastomers at ambient temperatures, such as the rubbery consistence, the thermoplastic elastomers can also be processed as a melt at elevated temperature. Thus, using a plastic basis material that is a thermoplastic and/or a thermoplastic elastomer allows recyclability of the colored plastic article by melting the granulates above the melting temperature $T_m$ of the plastic basis material.

Furthermore, the irradiation of the colored surface of the colored plastic article with ionizing radiation does not only generate the migration barrier, but also changes the physical and especially the thermal properties of the plastic basis material that forms the generated migration barrier. The irradiated parts, i.e. the migration barrier, loses its ability to melt at elevated temperatures. Thus, during recycling, after having heated the granulates above the melting temperature $T_m$ of the plastic basis materials, the solid migration barrier can be filtered off in the filtration step.

The glass transition temperature $T_g$ of the plastic basis material may be determined according to the following standards: DIN 51007 (Thermal Analysis - Differential Thermal Analysis and Differential Scanning Calorimetry - General Principles), ASTM E 474, ASTM D 3418, DIN EN ISO 11357-1 (Plastics - Differential Scanning Thermal Analysis Part 1: General principles. (2008)), ISO 11357-2 (Plastics - Differential Scanning Calorimetry Part 2: Determination of the glass transition temperature. (1999)), ISO / DIS 11357-3 (Plastics - Differential Scanning Calorimetry Part 3: Determination of the melting and crystallization temperature and the melting and crystallization enthalpy. (2009)), ISO 11357-4(Plastics - Differential Scanning Thermal Analysis (DSC) Part 4: Determination of specific heat capacity. (2005)).

The glass transition temperature $T_g$ of the plastic basis material may be determined using a Mettler Toledo DSC 3+ differential calorimeter, a sample amount of 10 +/- 1 mg, nitrogen as purge gas, and the following settings: 1. Heating: -40 °C to 280 °C with 20 °C/min, Hold: 3 minutes at 200 °C, Cooling: 280 °C to -40 °C at 10 °C/min, Hold: 5 minutes at -20 °C, 2. Heating: -40 °C to 300 °C at 20 °C/min.

The melting temperature $T_m$ of the plastic basis material may be determined according to the same standards and procedures as used for determining the glass transition temperature $T_g$ of the plastic basis material.

## Dyes

As already mentioned, the dye in the plastic basis material is a low molecular weight dye, that can be removed in the recycling process by migration. Preferably the dye is a molecule that absorbs electromagnetic radiation in the visible spectrum, thus the dye gives the plastic article a color that is visibly perceivable by humans. Preferably the dye is an organic molecule, more preferably an organic molecule having an aromatic structure, i.e. an organic aromatic dye. According to a preferred embodiment of the invention the organic aromatic dye has a molecular weight Mw in the range of about ≥ 250 g/mol to about ≤ 750 g/mol, preferably the dye has a molecular weight Mw in the range of about ≥ 270 g/mol to about ≤ 450 g/mol, and more preferably the dye has a molecular weight Mw in the range of about ≥ 285 g/mol to about ≤ 400 g/mol.

In order to enable a migration as unhindered as possible, the dye preferably has a rather planar structure and

preferably comprises at least one free rotation center outside the planar structure. Further in case of ligands and/or remnants which may be spatially or sterically demanding, the ligands and/or remnants may be as freely movable as possible around a center of rotation. This may give the dye the ability to adapt its shape to the environment given by the matrix of the plastic basis material. Preferably the dye may not comprise a spiro-center and/or the dye may not comprise a large moiety that is rotation-impaired. In this context a large moiety that is rotation impaired may mean that the molecular weight of this rotation impaired moiety is about 350 g/mol +/- 10%.

With regard to the dye, different types of dyes can be used: The dye may be a disperse dye, a solvent dye and/or an acid dye according to the name or designation according to the Color Index. Such dyes are predominantly molecularly soluble in the plastic basis material or in the carrier used to produce the plastic article and produce a homogenous either colored-opaque or colored-translucent or -transparent coloration of the plastic article. Preferably the dye is selected from the group comprising phthalocyanine, polymethine, anthraquinone, indanthrone, monoazo, diazo, methine, quinophthalone, perinone, naphthalidimide, indigo and thioindigo dyes.

More preferably the dye is selected from the group comprising the following chemical formulas A1 to A14 according to table 1:

Table 1

| | |
|---|---|
| Chemical formula A1 | 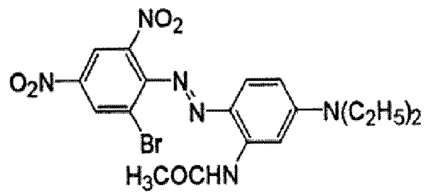 |
| Chemical formula A2 | 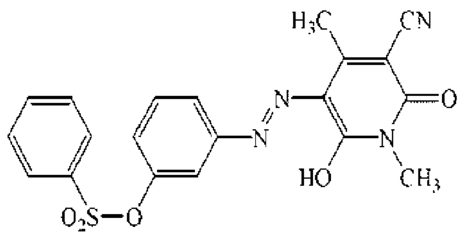 |
| Chemical formula A3 | 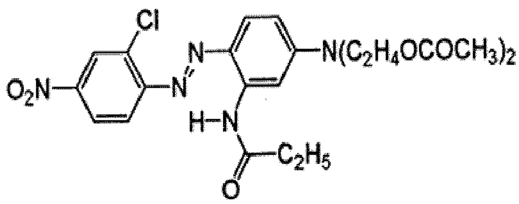 |
| Chemical formula A4 | 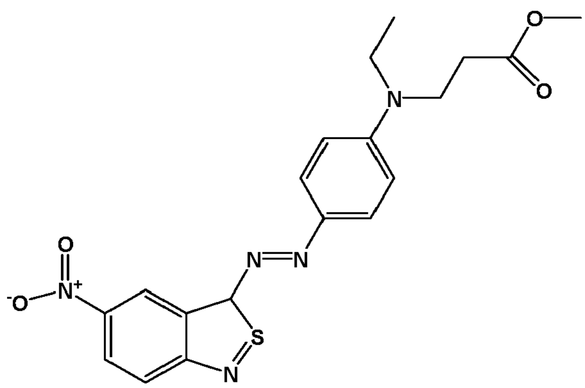 |

(continued)

| | |
|---|---|
| Chemical formula A5 | 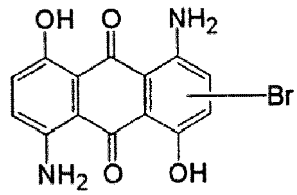 |
| Chemical formula A6 | 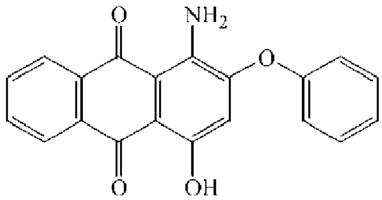 |
| Chemical formula A7 | 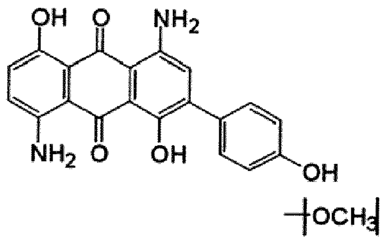 |
| Chemical formula A8 | 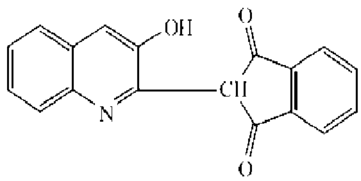 |
| Chemical formula A9 | 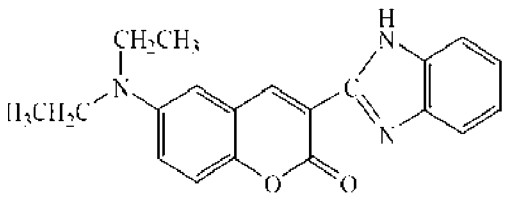 |
| Chemical formula A10 | 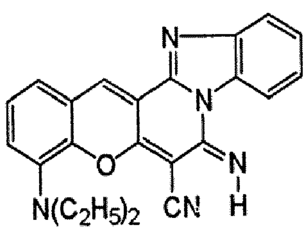 |
| Chemical formula A11 | 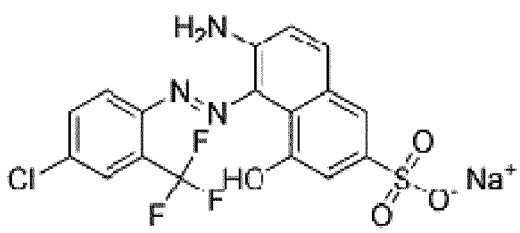 |

(continued)

| | |
|---|---|
| Chemical formula A12 | 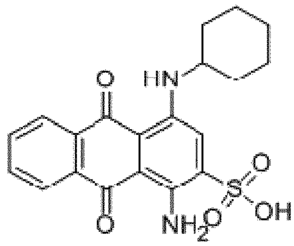 |
| Chemical formula A13 | 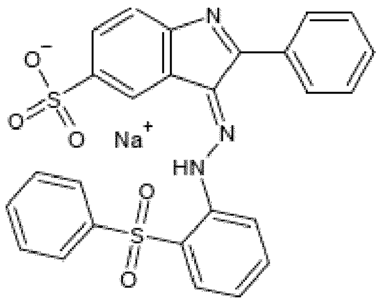 |
| Chemical formula A14 | 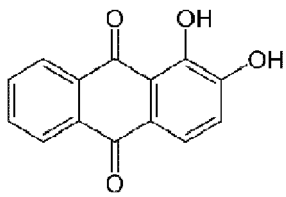 |

Regarding the chemical formula A7, the methoxy group -[OCH3] may be an alternative for the hydroxyl group -[OH] on the aromatic moiety, that is not part of the anthraquinone ring system.

Preferably the dye is selected from the group comprising the coloring agents known under the trademark BEMACRON S/SE/E from CHT Germany GmbH, or from Dystar Pte Ltd.

Preferably the dye is selected from the group comprising BEMACRON Yellow S-6GF, BEMACRON Yellow S-4g, BEMACRON Yellow Brown S-2RFl, BEMACRON Orange S-g, BEMACRON Scarlet S-gFl, BEMACRON Scarlet S-BWFl, BEMACRON Rubine S-2GFL, BEMACRON Violet S-3Rl, BEMACRON Violet S-BlF, BEMACRON Blue S-Bgl, BEMACRON Blue S-BB, BEMACRON Turquoise S-gF, BEMACRON Na-vy S-2gl, BEMACRON Navy S-3l, BEMACRON Black S-3l, BEMACRON Black S-T, BEMACRON Yellow SE-Rdl, BEMACRON Yellow SE-lF, BEMACRON Orange SE-Rdl, BEMACRON Red SE-4g, BEMACRON Pink SE-REl, BEMACRON Red SE-3B, BEMACRON Red SE-Rdl, BEMACRON Blue SE-lF, BEMACRON Blue SE-Rdl, BEMACRON Navy SE-RlX, BEMACRON Black SE-RlX, BEMACRON Black SE-Rd2R, BEMACRON Yellow E-3gl, BEMACRON Red E-FBl, BEMACRON Blue E-FBl, and BEMACRON Black E-R.

More preferably the dye is selected from the group comprising BEMACRON Black E-R, BEMACRON Yellow S-6GF, BEMACRON Rubine S-2GFL, BEMACRON Blue RS, BEMACRON Blue E-FBL 150, BEMACRON Red E-FBL, BEMACRON Blue S-BGL, BEMACRON Yellow E-3gl, BEMACRON Lumin. Yellow SEL-8G, and BEMACRON Lumin. Red SEL-G.

Furthermore the dye may be selected from the group of acid dyes comprising Bemacid Blau E-TL, Bemacid Rot E-TL or Bemacid Gelb E-TL, Bemacid Blue N-TF, Bemacid Red N-TF, Bemacid Yellow N-TF, Bemacid Leuchtgelb E-B, Bemacid Gelb E-4G, Bemacid Gelb E-T3R, Bemacid Gelb E-5R, Bemacid Leuchtrot E-B, Bemacid Rot E-KRL, Bemacid Rot E-T2B, Bemacid Rot E-3BS, Bemacid Blau E-2R, Bamacid Blau E-T4R, Bemacid Blau E-G, Bemacid Blau E-3GC, Bemacid Gelb N-2G, Bemacid Orange N-BG, Bemacid Rubin N-5B, Bemacid Bordeaux N-BL, Bemacid Blau N-5GL, Bemacid Marine N-5R, Bemacid Schwarz N-TMF, or the group of metal complex dyes Bemaplex BEMAPLEX Gelb M-T, BEMAPLEX Rot M-T and BEMAPLEX Marine M-T.

Furthermore, the dye may be selected from the group comprising polymethine dyes. Preferably, the polymethine dyes from the companies BÜFA GmbH & Co. KG, BÜFA Chemikalien GmbH & Co. KG, BÜFA Composite Systems GmbH & Co. KG, and/or BÜFA Reinigunssysteme GmbH & Co. KG may be used.

The dye may be a ready-to-use dye, i.e. a dye comprising a dispersing agent or another additive for example to ensure sufficient solubility in a coloring bath or incorporated in the carrier of a color masterbatch. Alternatively, it may

be a dye not comprising a dispersing agent or any additive.

**Plastic basis material and carrier**

As already mentioned, the dye is predominantly molecularly solved in the plastic basis material or in the carrier, which means that about 80 % to 100 % of the dye are molecularly solved in the plastic basis material or in the carrier. In other words, the plastic basis material or the carrier act as solvent for the dye in the colored plastic article. This has the advantage that the plastic article produced has a high color homogeneity and highly transparent parts are possible.

In general, the plastic basis material may be any plastic or any mixture of plastics and may be selected according to the use of the plastic article. Preferably the plastic basis material is a thermoplastic and/or a thermoplastic elastomer. Furthermore, the dyes in the colored plastic article may be easily soluble in polar polymers such as co-polyester, co-polycarbonates, acrylonitrile-butadiene-styrene, polyamide, polyurethane, and/or polyalkyl(meth)acrylate. The solubility of the dye in non-polar polymers such as polyalkylenes, polyethylene (PE), polypropylene (PP), polybutylene (PB), polystyrene may not be high enough to give satisfying results in term of color homogeneity and/or color strength in the plastic article.

To this regard the plastic basis material is based on a polar polymer or on a blend comprising at least 0.25 wt.-% of a polar polymer wherein the polar polymer has a molecular weight Mw ≥ 1000 g/mol, preferably Mw ≥ 1200 g/mol, more preferably Mw ≥ 1500 g/mol and has at least 5 wt.-% of heteroatoms based on the molecular weight of the polar polymer, wherein heteroatoms are any atoms except C and H atoms, or

the plastic basis material is based on a further polymer blend comprising at least 99.75 wt.-% of the non-polar polymer and the carrier, wherein the non-polar polymer has a molecular weight Mw ≥ 1000 g/mol, preferably Mw ≥ 1200 g/mol, more preferably Mw ≥ 1500 g/mol and has less than 5 wt.-% of heteroatoms based on the molecular weight of the non-polar polymer, wherein heteroatoms are any atoms except C and H atoms.

Preferably the heteroatom is selected from the group comprising O, N, S, P, F, Cl, Br, and I. Preferably, the plastic basis material is selected differently to the carrier.

The carrier is a polar compound, or a blend comprising at least 10 wt.-% of a polar-compound or mixtures thereof, wherein the polar-compound has a molecular weight Mw < 1000 g/mol, preferably Mw < 900 g/mol, more preferably Mw < 800 g/mol and has at least 5 wt.-% of heteroatoms based on the molecular weight of the polar compound, wherein heteroatoms are any atoms except C and H atoms. Preferably the heteroatom is selected from the group comprising O, N, S, P, F, Cl, Br, and I. Preferably, the carrier is selected differently to the plastic basis material.

In other words, in case the plastic basis material is based on a non-polar polymer or on a blend comprising at least 99.75 wt.-% of a non-polar polymer, the carrier, which is polar, is used to achieve good color homogeneity.

Mw of polar polymer and non-polar polymer

For polymers the individual polymer chains rarely have exactly the same degree of polymerization and molar mass, and there is a distribution around an average value (molecular weight distribution (MWD)). To this regard, the molecular weight of the polar polymer and non-polar polymer is given with respect to the Mass average molar mass or Mw (also commonly referred to as weight average or Weight Average Molecular Weight (WAMW)).

The mass average molecular mass can be determined by gel permeation chromatography, static light scattering, small angle neutron scattering, X-ray scattering, and/or sedimentation velocity. Furthermore, in case the distribution is known, the mass average molecular mass can be calculated by

$$\bar{M}_w = \frac{\sum_i N_i M_i^2}{\sum_i N_i M_i}$$

where Ni is the number of molecules of molecular mass Mi.

Polar-polymer or mixture

The polar polymer or mixture thereof may be selected from the group comprising:

- polyacrylate with methyl (polymethylacrylate), ethyl (polyethylacrylate), propyl (polypropylacrylate), or butyl (polybutylacrylate),
- polymethacrylate with methyl (polymethylmathacrylate), ethyl (polyethylmethacrylate), propyl (polypropylmethacrylate), or butyl (polybutylmethacrylate),

- copolymers of acrylic and methacrylic esters including, among others, *tert*-Butyl (meth)acrylate, pentyl(meth)acrylate and 2-ethylhexyl(meth)acrylate; (Meth)acrylates derived from unsaturated alcohols, preferably oleyl(meth)acrylate, 2-propynyl(meth)acrylate, allyl(meth)acrylate, vinyl(meth)acrylate;
- aryl(meth)acrylates polymers, preferably benzyl(meth)acrylate polymers or phenyl(meth)acrylate polymers, the aryl radicals each being unsubstituted or up to four times substituted;
- cycloalkyl(meth)acrylates polymers, preferably 3-vinylcyclohexyl(meth)acrylate polymers, bornyl (meth)acrylate polymers;
- hydroxylalkyl (meth)acrylates polymers, preferably 3- hydroxypropyl (meth)acrylate polymers, 3,4- dihydroxybutyl(meth)acrylate polymers, 2-hydroxyethyl(meth)acrylate polymers, 2-hydroxypropyl(meth)acrylate polymers;
- glycol di(meth)acrylates polymers, preferably 1,4-butanediol (meth)acrylate polymers;
- (meth)acrylates of ether alcohols polymers, preferably tetrahydrofurfuryl (meth)acrylate polymers, vinyloxyethoxyethyl(meth)acrylate polymers;
- polymers of amides and nitriles of the (meth)acrylic acid, preferably N-(3-dimethylaminopropyl)(meth)acrylamide polymers, N-(diethylphosphono)(meth)acrylamide polymers, 1-methacryloylamido-2-methyl-2-propanol polymers;
- polymers of sulfur-containing methacrylates, preferably ethylsulfinylethyl(meth)acrylate, 4-thiocyanatobutyl(meth)acrylate polymers, ethylsulfonylethyl(meth)acrylate polymers, thiocyanatomethyl(meth)acrylate polymers, methylsulfinylmethyl(meth)acrylate polymers, bis((meth)acryloyloxyethyl)sulfide polymers;
- polyhydric (meth)acrylates, preferably trimethyloylpropanetri(meth)acrylate polymers;
- acrylonitrile polymers;
- vinyl ester polymers, preferably vinyl acetate polymers;
- styrene polymers, substituted styrenes polymers with an alkyl substituent in the side chain, preferably $\alpha$-methylstyrene and $\alpha$-ethylstyrene, substituted styrenes polymers with an alkyl substituent on the ring, preferably vinyl toluene, and *p*-methylstyrene, halogenated styrene polymers, preferably monochlorostyrene polymers, dichlorostyrene polymers, tribromostyrene polymers and tetrabromostyrene polymers;
- heterocyclic vinyl polymers, preferably 2-vinylpyridine polymers, 3-vinylpyridine polymers, 2-methyl-5-vinylpyridine polymers, 3-ethyl-4-vinylpyridine polymers, 2,3-dimethyl-5-vinylpyridine polymers, vinylpyrimidine polymers, vinylpiperidine polymers, 9-vinylcarbazole polymers, 3-vinylcarbazole polymers, 4-vinylcarbazole polymers, 1-vinylimidazole polymers, 2-methyl-1-vinylimidazole polymers, N-vinylpyrrolidone polymers, 2-vinylpyrrolidone polymers, N-vinylpyrrolidine polymers, 3-vinylpyrrolidine polymers, N-vinylcaprolactam polymers, N-vinylbutyrolactam polymers, vinyl oxolane polymers, vinyl furan polymers, vinyl thiophene polymers, vinylthiolane polymers, vinylthiazoles and hydrogenated vinylthiazoles polymers, vinyloxazoles and hydrogenated vinyloxazoles;
- polymers of vinyl and isoprenyl ethers;
- maleic acid polymers, preferably maleic anhydride polymers, methyl maleic anhydride polymers, maleimide polymers, methyl maleimide;
- copolymers of ethylene and/or propylene with acrylic esters, preferably polyethylen-block-co-polymethylmethacrylat, polypropylen-block-co-polymethylmethacrylat, and ethylene-acrylate copolymers;
- aliphatic and/or aromatic polyesters, preferably, hydroxyl-functional dendritic polyesters, polycaprolactone, polyethylenterephthalate (PET), polyethylene naphthalate (PEN), polyethylene furanoate (PEF), polytrimethylenterephthalat (PTT), polybutylenterephthalat (PBT), glycolized polyglycolterephthaltat (G-PET), amorphous polyethylenterephthalat (A-PET), polyesters of terephthalic acid, polyspiro-diol-terephthalate, polypentaspiroglycol-terephthalate (PSG), polycyclohexylenedimethylene-terephthalate (PCT), Polyethylenfuranoate (PEF), Polyethylennaphthylat, polyester based copolymer including a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate, polyester based copolymer including a dicarboxylic acid-derived residue including a residue derived from an aromatic dicarboxylic acid and a diol-derived residue including a residue derived from 4,4-(oxybis(methylene)bis) cyclohexane methanol;
- polycarbonate (PC), 2,2-Bis-(4-hydroxyphenyl)-propan (Bisphenol A) polycarbonate, 2,2-Bis-(4-hydroxyphenyl)-butan (Bisphenol B) polycarbonate, 1,1-Bis(4-hydroxyphenyl)cyclohexan (Bisphenol C) polycarbonate, 2,2'-Methylendiphenol (Bisphenol F) polycarbonate, 2,2-Bis(3,5-dibrom-4-hydroxyphenyl)propan (Tetrabrombisphenol A) polycarbonate und 2,2-Bis(3,5-dimethyl-4-hydroxyphenyl)propan (Tetramethylbisphenol A) polycarbonate, bisphenol S polycarbonate, dihydroxydiphenylsulfid polycarbonate, tetramethylbisphenol A polycarbonate, 1,1-Bis(4-hydroxyphenyl)-3,3,5-trimethylcyclohexane (BPTMC) polycarbonate, 1,1,1-Tris(4-hydroxyphenyl)-ethane (THPE) polycarbonate;
- aliphatic polyamide (PA), preferably PA 6 based on polycaprolactam, PA 6.6 based on 1,6-hexamethylendiamin and adipic acid, PA 6.66 based on caprolactam, co-poymer of hexamethylendiamin and adipic acid, PA 66.610 based on hexamethylendiamin, copolymer of adipic acid and sebaic acid, PA 4.6, PA10, PA 12 and PA copolymers;
- polyurethane (PU),
- polar-copolymere, maleic anhydride-olefin copolymer;

- polyalkylenoxide, polyalkylene block copolymer, propylenoxide-ethylenoxide copolymer, (m)ethylene acrylate-maleic anhydride copolymer;
- polar-terpolymere, preferably reactive terpolymers of ethylene, acrylic ester and maleic anhydride, or ethylene, methacrylic ester and maleic anhydride, or ethylene, acrylic esters and glycidyl methacrylate, or ethylene, methacrylic esters and glycidyl methacrylate, or ethylene, (meth)acrylic esters and methyl (methyl(meth)acrylate), ethyl (ethy(meth)acrylate), propyl (propyl(meth)acrylate), or butyl (butyl(meth)acrylate), polyamide, polyester-polyamides, or butyl (butyl(meth)acrylate), polyether-polyamide copolymers;
- polar polymer blends, preferably polycarbonate/polyethylenterephthalat blends (PC/PET blends), polycarbonate/polybutyleneterephthalate blends (PC/PBT blends), blends of polycyclohexylene dimethylene terephthalate copolymer, blends of poly(butylene-adipate-terephthalate);
- polyacrylnitril and polyacrylnitril-copolymers, preferably poly acrylonitrile butadiene styrene (ABS), poly styrene-acrylonitrile;
- polystyrene and polystyrene copolymers, preferably styrene/butadiene co-polymer (SBR), poly styrene-isoprene-styrene (SIS), poly(glycidyl methacrylate) grafted sulfonamide based polystyrene resin with tertiary amine;
- ethylene-vinyl acetate;
- polyether, preferably polyethyleneglycol, polyethyleneglycol with at least one fatty acid coupled to the polyethyleneglycol, terminating functional groups such $NH_2$-terminated polyethers;
- functionalized polyacrylamide polymers, copolymers and terpolymers, preferably poly(2-acrylamido-2-aminopropionicacid) (polyAMPA), poly(2-acrylamido-2-amino propane sulfonic acid), poly(N-isopropylacylamide (polyPNIPAM); poly (amidoamine-co-acrylic acid) copolymer, poly(N,N-dimethylacrylamide-co-sodium acrylate), poly(acrylamide-co-sodium acrylate)/poly(ethylene glycol) semi-IPN, poly(acrylamide-co-sodium 4-styrenesulfonate), poly(acrylamide-co-sodium 4-styrenesulfonate)/poly(ethylene glycol) semi-IPN, poly(acrylamide-co-sodium methacrylate), poly(acrylamide-co-sodium methacrylate) /poly(ethylene glycol) semi-IPN, and/or poly(N-isopropylacrylamide-co-acrylic acid) and poly(acrylamide-co-acrylic acid;
- poly(ether sulfones)/poly(ethyleneimine) (PES/PEI);
- polyvinylpyrrolidone, preferably poly(N-vinyl-2-pyrrolidone), poly(N-vinyl-2-pyrrolidone-co-acrylonitrile) treated with hydroxylamine-hydrochloride
- polyvinyl alcohol; and/or
- poly(1-naphthylamine)-camphorsulphonic acid.

Other polar polymers of amorphous co-polyester, which can be used are known under the tradename Akestra 90, 100 and 110. The above named synthetic polar-polymers may be used alone or in a mixture of two or more.

With regard to hydroxyl-functional dendritic polyesters that can be suitable used as a polar polymer, these molecules may be produced using polyalcohol cores, hydroxy acids and technology based on captive materials. The dendritic structures may be formed by polymerization of the particular core and 2,2-dimethylol propionic acid (Bis-MPA). The hydroxyl-functional dendritic polyesters may be known under the trade name Boltorn®. The following dendritic polymers may be used as non-limiting examples: Boltorn® H20 16 terminal hydroxyl groups, nominal molecular weight of 1750 g/mol, Boltorn® H2004 6 terminal hydroxyl groups, nominal molecular weight of 3100 g/mol, Boltorn® H311 23 terminal hydroxyl groups, nominal molecular weight of 5300 g/mol, Boltorn® P500 Formulated bimodal product with terminal hydroxyl groups, nominal molecular weight 1800 g/mol, Boltorn® P1000 formulated bimodal product with terminal hydroxyl groups, nominal molecular weight 1500 g/mol, Boltorn® U3000 modified with unsaturated fatty acid, nominal molecular weight 6500 g/mol, Boltorn® W3000 modified with non-ionic groups and unsaturated fatty acid, nominal molecular weight 10000 g/mol.

With regard to the polyester based copolymers that can be suitable used as a polar polymers, these may further include but not limited to a dicarboxylic acid-derived residue including a residue derived from an aromatic dicarboxylic acid and a diol-derived residue including a residue derived from 4-(hydroxymethyl)cyclohexylmethyl-4'-(hydroxymethyl)cyclohexane carboxylate represented by the following chemical formula 1 and a residue derived from 4,4-(oxybis(methylene)bis) cyclohexane methanol represented by the following chemical formula 2.

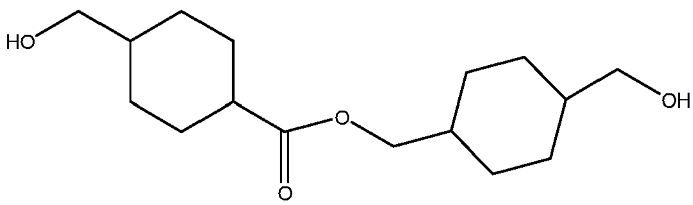

Chemical Formula 1

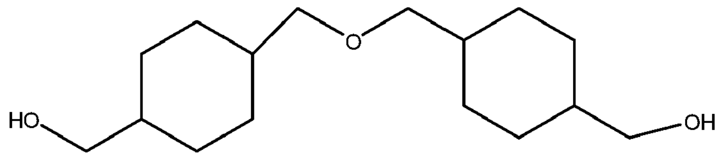

Chemical Formula 2

The compounds of chemical formula 1 and 2 can be copolymerized with aromatic dicarboxylic acid may be one or more selected from a group consisting of terephthalic acid, dimethyl terephthalate, cyclic dicarboxylic acid, isophthalic acid, adipic acid, azelaic acid, naphthalene dicarboxylic acid, and succinic acid.

The diol-derived residue of the copolymers may further include a residue derived from one or more other diols selected from a group consisting of 1,4-cyclohexane dimethanol, 1,2-propanediol, 1,3-propanediol, 1,4-butanediol, 2,2-dimethyl-1,3-propanediol, 1,6-hexanediol, 1,2-cyclohexanediol, 1,4-cyclohexanediol, 1,2-cyclohexane dimethanol, 1,3-cyclohexane dimethanol, 2,2-dimethylpropane-1,3-diol (neopentyl glycol), ethylene glycol, and diethylene glycol. A content of the diol derived residues of the residue derived from 4-(hydroxymethyl)cyclohexylmethyl 4'-(hydroxymethyl)cyclohexane carboxylate, the residue derived from 4,4-(oxybis(methylene)bis) cyclohexane methanol, and other diol-derived residues may be about 10 to 80 mol% based on 100 mol% of the dicarboxylic acid co-monomer.

The polar polymer may also comprise the polyester based copolymers used in a mixture with polyethylene terephthalate (PET). The mixture may consist of 1 to 99 wt.-% of PET and 1 to 99 wt.-% of the polyester based copolymers, in order that both components add up to 100 wt.-%. Additionally, or alternatively the compounds according to chemical formulas 1 and 2 may be used as co-monomers together with a further diol-component, e.g. ethylene glycol, in the preparation of the polyester based copolymers.

The polyester based copolymer may be prepared by reacting the dicarboxylic acid including the aromatic dicarboxylic acid with the diol including 4-(hydroxymethyl)cyclohexylmethyl 4'-(hydroxymethyl)cyclohexane carboxylate represented by chemical formula 1 and 4,4-(oxybis(methylene)bis) cyclohexane methanol represented by chemical formula 2 to perform an esterification reaction and a polycondensation reaction. In this case, other diols such as 1,4-cyclohexane dimethanol, ethylene glycol, diethylene glycol, or the like, as described above may be further reacted, such that a polyester based copolymer further including other diol-derived residues may be prepared.

With regard to the polyether, these may comprise but not limited to compounds that contain at least one polyethyleneglycol moiety and at least one fatty acid moiety coupled to the polyethyleneglycol moiety. The polyethyleneglycol moiety may contain 10 to 25 ethyleneglycol repeating units. The fatty acid moieties may be saturated or unsaturated and may contain 10 to 30 carbon atoms, preferably 16 to 22 carbon atoms. Examples of these fatty acid moieties are oleate, laureate, stearate, palmitate and ricinoleate. A specific preferred example may be ethoxylated sorbitan ester.

The ethoxylated sorbitan ester comprises a sorbitan group which is substituted by four polyethylene glycol substituents. The ethoxylated sorbitan ester may preferably comprise 14 to 26 ethylene glycol repeating units, preferably 16 to 24 ethylene glycol repeating units, more preferably between 18 and 22 repeating units. At least one of the ethylene glycol substituents in the ethoxylated sorbitan ester is connected via an ester bond to a fatty acid moiety. Preferably, at least two of the ethylene glycol substituents in the ethoxylated sorbitan ester are connected via an ester bond to a fatty acid moiety; more preferably at least three of the ethylene glycol substituents are connected via an ester bond to a fatty acid moiety. The fatty acid moieties may be saturated or unsaturated and may contain 10 to 30 carbon atoms, preferably 16 to 22 carbon atoms.

Examples of these fatty acid moieties are oleate, laureate, stearate and palmitate. Most preferred are ethoxylated sorbitan esters comprising four polyethylene glycol substituents and wherein the ester comprises between 18 and 22 ethylene glycol repeating units and wherein three of the ethylene glycol substituents are connected to oleate, laurate or stearate groups.

Examples of ethoxylated sorbitan esters that can be used as polar-polymer are polyoxyethylene (20) sorbitane monolaurate, polyoxyethylene (20) sorbitane dilaurate, polyoxyethylene (20) sorbitane trilaurate, polyoxyethylene (20) sorbitane mono-oleate, polyoxyethylene (20) sorbitane di-oleate, polyoxyethylene (20) sorbitane tri-oleate, polyoxyethylene (20) sorbitane monostearate, polyoxyethylene (20) sorbitane distearate, polyoxyethylene (20) sorbitane tristearate, and polyoxyethylene (20) sorbitan monooleate, also known as Polysorbate 80 and E433.

Polysorbates are ethoxylated sorbitan fatty acid esters in the form of oily liquids. These non-ionic surfactants are used as wetting agents or as emulsifiers of the O/W type, for example, in cosmetics, pharmaceuticals, foods, cleaning agents and detergents. Well-known trade names include Tween, Scattics, Alkest and Canarcel. The different types of polysorbates differ in the fatty acid, the average number of polyoxyethylene units in the molecule and the degree of esterification. The two-digit number of the name of each polysorbate follows a certain scheme: The first number stands for the mainly esterified acid: 2=lauric acid, 4=palmitic acid, 6=stearic acid, 8=oleic acid, 12=isostearic acid. The second digit indicates the type of esterification: 0 for a monoester with 20 polyoxyethylene units, 1 for a monoester with 4 or 5 polyoxyethylene units and the number 5 stands for a triester with 20 polyoxyethylene units.

Polysorbate 80 is a polyoxyethylated compound derived from sorbitol and oleic acid. The hydrophilic groups of this non-ionic surfactant are polyethers, polymers of a total of 20 ethylene oxides. Other representatives from the group of polysorbates are for example: Polysorbate 20, Polysorbate 40, Polysorbate 60, and Polysorbate 65.

Preferably the polar polymer has a molecular weight Mw ≥ 1000 g/mol, preferably Mw ≥ 1200 g/mol, more preferably Mw ≥ 1500 g/mol.

Polar compound and mixtures thereof

The carrier comprises a polar compound or a mixture of polar compounds. Preferably the polar compound has a molecular weight Mw < 1000 g/mol, more preferably < 900 g/mol, even more preferably < 800 g/mol. The polar compound may be selected from the group comprising aliphatic acids $CH_3$-$[CH_2]_n$-COOH acids (n about ≥ 3), amino acids, carboxylic acid amide, hydroxyl acids, fatty acids, and their esters aliphatic or aliphatic/aromatic aldehydes and ketones, esters, pentaerythritol, pentaerythritol dimers, pentaerythritol trimers, pentaerythritol ester preferably carboxylic acid ester, benzoic acid esters comprising benzyl benzoat or phenyl benzoat, phenylether, alcohols and polyvalent alcohols, preferably glycerine, amines.

The carboxylic acid amide may comprise a compound according to formula $C_2H_4(NHC(O)R^3)_2$, wherein $R^3$ is a fatty acid moiety comprising 10-17 carbon atoms. The fatty acid moieties may be saturated or unsaturated. When the amount of carboxylic acid amide is too high the colored plastic article may show blooming. Blooming i.e. discolorations may be caused by phase separation of the plastic material's components. It may be caused by incompatibilities of the polar compound with the plastic basis material.

Pentaerythritol may comprise a compound according to formula $C(CH_2OR)_4$, wherein R may be H, or wherein R may be a fatty acid moiety comprising 5-8 carbon atoms. The fatty acid moieties can be saturated or unsaturated. R may be also another moiety like ether, amide and/or urethane. As Pentaerythritol Perstorp Charmor PM 40 may be used.

Furthermore, the polar compound may be an ether. The ether may comprise but not limited to compounds that contains at least one ethyleneglycol moiety and at least one fatty acid moiety coupled to the ethyleneglycol moiety.

Examples of compound that contains at least one ethyleneglycol moiety and at least one fatty acid moiety coupled to the polyethyleneglycol moiety include PEG 300-monostearate, PEG 400 monolaurate.

The carboxylic acid ester may comprise a compound according to the following chemical formula 3:

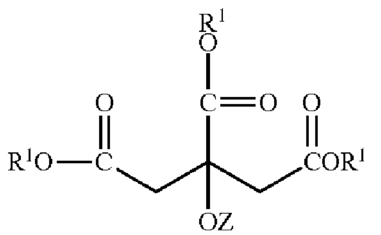

Chemical Formula 3

wherein $R^1$ is an alkyl group comprising 1-20 carbon atoms and Z is hydrogen or a group according to the formula $C(O)R^2$, wherein $R^2$ is an alkyl group comprising 1-20 carbon atoms. $R^1$ may be the same or different and is an alkyl group comprising 1-20 carbon atoms, preferably 1-15 carbon atoms, more preferably 1-10 carbon atoms. $R^2$ is an alkyl group comprising 1-20 carbon atoms, preferably 1-10 carbon atoms, more preferably 1-5 carbon atoms. Non-limiting examples of the carboxylic acid ester are triethylcitrate, tributylcitrate, trihexylcitrate, acetyltributylcitrate (ATBC; $R^1$ = $C_4H_9$, Z = $CH_3CO$), propanoyltributylcitrate, acetyltrihexylcitrate and butanoyltriethylcitrate.

Furthermore, as polar compound 4-(hydroxymethyl)cyclohexylmethyl-4'-(hydroxymethyl)cyclohexane carboxylate represented by the chemical formula 1, 4,4-(oxybis(methylene)bis) cyclohexane methanol represented by the chemical formula 2, and mixtures thereof may be used:

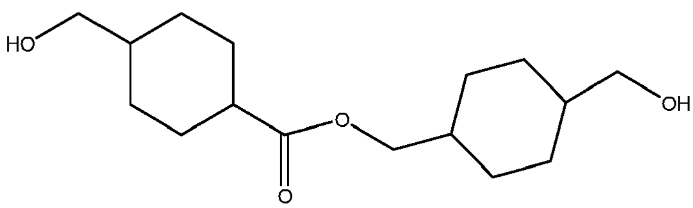

Chemical Formula 1

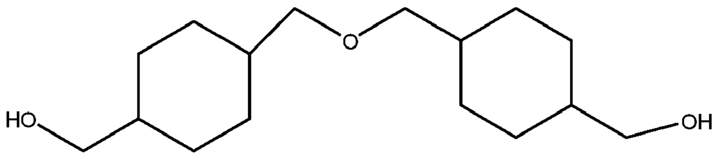

Chemical Formula 2

Non-polar polymer

As already mentioned above, the plastic basis material may comprise a non-polar-polymer or mixtures of non-polar polymers. In connection to this non-polar-polymer the non-polar-polymer may be selected from the group of polyalkylene polymers, polyalkylene copolymers, polyakylene block copolymers. The non-polar-polymer may be preferably selected from polymeric aliphatic or aromatic hydrocarbons, preferably polyalkylene polymers, polyalkylene co- and terpolymer with random or block-structure; and more preferred from polyethylen (PE), polypropylene (PP), polybutene (PB), polystyrene, polyisobutylene, polybutadiene, polyisoprene. Preferably the non-polar-polymer may have a wt.-% of heteroatoms below 5 wt.-% with respect to the mass of the non-polar-polymer. Preferably the non-polar polymer has a molecular weight Mw $\geq$ 1000 g/mol, preferably Mw $\geq$ 1200 g/mol, more preferably Mw $\geq$ 1500 g/mol.

Crosslinking-agents

With regard to an improved generation of the migration barrier by exposing the colored surface of the colored plastic article to the ionizing radiation and according to a preferred embodiment of the invention, the plastic basis material comprises a crosslinking-agent, wherein the crosslinking-agent is selected from the group of:

- poly-functional monomers, preferably from trimethylolpropane triacrylate (TMPTA), trimethylolmethane tetraacrylate (TMMT), trimethylolpropane trimethacrylat (TMPTMA) tripropyleneglycol diacrylate (TPGDA), m-phenylene bismaleimide (PhDMI) and mixtures thereof; and/or
- substituted triazines, preferably from triallyl cyanurate (TAC), triallyl isocyanurate (TAIC), trimercapto triazine, and/or mixtures thereof; and/or
- crosslinikg-agents of the lactam, ether, polyalkylene glycol, polyamide, polyamidoamine, polyamine, polyester, polyester alcohol, polyurethane and polyurea type.

These crosslinking-agents have the advantage that the generation of the migration barrier is enhanced. Thus, less energy is used and the method for stabilizing the dye in the colored plastic article is less expensive and more environment friendly.

The crosslinking-agents can be used as pre-compounded materials or crosslinking-masterbatches, which simplifies processing on conventional plastics processing machines. TAIC, TAC or TMPTMA are commercially available as masterbatch with a polymeric carrier substance of LLD-PE or PA6 (Prisma Rubber Additives: Adsperse TAIC 50; Evonik: TAC/TAICROSS/TAICROSS M). Preferably the crosslinking-masterbatches comprise up to 60% crosslinking-agent.

According to a further preferred embodiment of the invention the plastic basis material comprises the crosslinking-agent in an amount of 0.3 % to 6 %, preferably of 0.6 % to 3.6 %, more preferably of 1.2 % to 3 % based on the weight of the plastic basis material. In case crosslinking-masterbatches are used the amount of crosslinking-masterbatch is adapted according to the dose of crosslinking agent in the crosslinking-masterbatch. The above named commercially available masterbatch are typically used in an amount of 0.5 % to 10 %, preferably in an amount of 1 % to 6 % more preferably in an amount of 2 % to 5 % based on the weight of the plastic basis material.

**a) Providing the colored plastic article**

As already mentioned, there are different methods for providing the colored plastic article. It is possible that the colored plastic article is provided by dying an uncolored article in a coloring bath comprising the dye. The dye in the coloring bath migrates into the uncolored plastic article and thus a colored plastic article is provided. In this case, only the surface and/or surfaces of the uncolored article that have been exposed to the coloring bath are colored. Furthermore, since the dye migrates into the plastic basis material of the plastic article only an outer layer of the surface exposed to the coloring bath may be colored.

In the context of this invention providing an uncolored plastic article means that the plastic article provided has a color that is only dependent on the plastic basis material it is made of and not dependent on the dye that is used for coloring the plastic article. In other words, uncolored is the color of the plastic basis material when no dye is added. Accordingly, being uncolored can mean that the plastic article is transparent or translucent for human perception - i.e. that light in the visible spectrum can pass through the uncolored plastic article. Alternatively, being uncolored can mean

that the plastic article is opaque for human perception- i. e. that light in the visible spectrum is not transmitted or only partially transmitted. In case of opacity the uncolored plastic article may have a whitish, slight yellowish or slight greyish color dependent on the plastic basis material it is made of.

Alternatively, the colored plastic article may be provided by using a color masterbatch or liquid color comprising the dye in a plastic forming process. Since in this case, the dye is distributed in the plastic basis material when the plastic article is formed, a plastic article that is dyed throughout its entire volume is provided. It is possible that the plastic article consists of several individual layer and only one or some of these individual layers are colored. For example, if the color masterbatch is only added to the outer layer, only this layer is colored. The remaining layers retain the original color of the plastic or plastic blend. With regard to the plastic forming process a variety of different processing methods may be used. According to a preferred embodiment of the invention the plastic forming processing method is selected from:

- thermoplastic processing method;
- film extrusion processing method, blown cast processing method, calandered films processing method, thermoforming sheets processing method, foam extrusion processing method, profile extrusion processing method, injection molding processing method, injection blow molding processing method, injection stretch blow molding processing method, compression molding processing method, extruding processing method, thermoforming processing method, blowing processing method and/or 3D-printing processing method.

As already mentioned, when using the coloring bath for providing the colored plastic article it may be possible that only an outer layer of the surface exposed to the coloring bath is colored. Since only the outer layer of the plastic article is colored, less dye is in the colored plastic article and thus the recycling of such a colored plastic article is less laborious. Depending on the type of dye the coloring bath is an aqueous solution (e.g. in case the dye has a high solubility in water, e.g. acidic dyes) or the coloring bath is an aqueous dispersed solution (e.g. in case the dye has a low solubility in water). In this regard and according to a preferred embodiment of the invention the colored plastic article is provided by i) exposing the surface of the uncolored plastic article to the coloring bath, wherein the coloring bath is an aqueous dispersed solution and comprises

- the dye having a molecular weight Mw in the range of about ≥ 250 g/mol to about ≤ 750 g/mol,
- at least one dispersing agent for dispersing the dye in the aqueous solution, and
- optionally at least one solubilizer,
- optionally at least one levelling agent,

wherein the coloring bath has a temperature in the range of about ≥ 30 °C to about ≤ 150 °C and optionally a pH in the range of about ≥ 2.5 and < 7, and wherein the dispersing agent is selected different from the solubilizer.
In this regard and according to a preferred embodiment of the invention the colored plastic article is provided by i) exposing the surface of the uncolored plastic article to the coloring bath, wherein the coloring bath is an aqueous solution and comprises

- the dye having a molecular weight Mw in the range of about ≥ 250 g/mol to about ≤ 750 g/mol,
- optionally at least one solubilizer, and
- optionally at least one levelling agent,

wherein the coloring bath has a temperature in the range of about ≥ 30 °C to about ≤ 150 °C and optionally a pH in the range of about ≥ 2.5 and < 7, and wherein the solubilizer is selected different from the and the levelling agent.
Providing the colored plastic article by exposing the surface of the uncolored plastic article to the coloring bath has the advantage that less dye is incorporated into the colored plastic article compared to using a color masterbatch or liquid color comprising the dye in the plastic forming process if no multilayer plastic article is produced, in which only one or some layers but not all layers are colored by a masterbatch. Ordinary plastic articles are often produced in a single layer, as the process costs in particular are significantly lower than those for the production of multilayer articles. Thus, when recycling the colored plastic article less effort is necessary, and the process is more environmentally friendly. When using a coloring bath, a thickness of the colored layer is preferably about ≥ 5 μm. Thus, a satisfying color quality of the colored plastic article can be achieved, with a low amount of dye in the colored plastic article.

In contrast to the textile dyeing or the coloring of filaments and fibers in the non-woven area, the object of exposing the surface of the uncolored plastic article to the coloring bath is not to dye through. The object is rather to dye a defined thickness - preferably ≥ 5 μm - of the outer surface. This means the dye concentration is enriched in a defined thickness of the outer surface of the plastic article. Accordingly, a thin but deeply colored layer in the plastic article is obtained. Furthermore, a color change from translucent like frosted glass to a deep color may be achieved with a low amount of dye, because a defined thickness of the outer layer is colored and need not be colored through.

Dispersing agent

As already mentioned, the dye is predominantly molecularly soluble in the plastic basis material. However, the dye may not be molecularly soluble in the aqueous solution of the coloring bath. The dispersing agent may enhance the solubility of the dye in the aqueous solution. Preferably the dispersing agent is dye affine such as ethoxylated oleylamines.

The dispersing agent is selected different to the solubilizer and the levelling agent and may be used in addition to the solubilizer and/or levelling agent. In case a dye with a high solubility in water is used, the dispersing agent can be omitted.

The dispersing agent may be selected from the group comprising at least one:

- anionic tenside, preferably selected from polyphosphates, polyacrylates, aromatic sulfonates, esters with ethoxylate groups, esters with sulfonate groups, fatty acid-based polymers with an anionic group, salts of polycarboxylic acids, ethoxylates, thiourea dioxide;
- cationic tenside, preferably selected from quaternary ammonium compounds, fatty acid-polymers with a cationic group per molecule;
- non-ionic tenside, preferably selected from aromatic esters and hydrocarbons, aromatic and non-aromatic carboxylic acid esters, ethyl acrylate, fatty acid esters, ethoxylated fatty acid, poly oxyethylated compounds derived from sorbitol and oleic acid, polymers that are fatty acid-based with a non-ionic group per molecule, acrylate-copolymers, acrylate/styrene copolymers, fatty acid derivatives, polyalkoxylate;
- polyurethane (PUR) polymers and/or polyacrylate polymers, preferably linear or branched polyurethane (PUR) polymers and/or polyacrylate polymers, more preferred the polyurethane (PUR) polymer and/or polyacrylate polymer having a MW of 5000 to 30000 g/mol.

The polyacrylate polymers may be preferably selected from the Efka® 4000 series from BASF SE.

The dispersing agent may contain tertiary nitrogen compounds.

A dispersing agent that can be suitable used may be a substance that holds two or more immiscible liquids or solids in suspension, e.g., water and the dye. Dispersing agents which may be used include ionic dispersing agent, non-ionic dispersing agent, or mixtures thereof. Typical ionic dispersing agents are anionic dispersing agents, including ammonium salts or alkali salts of carboxylic, sulfamic or phosphoric acids, for example, sodium lauryl sulfate, ammonium lauryl sulfate, lignosulfonic acid salts, ethylene diamine tetra acetic acid (EDTA) sodium salts and acid salts of amines such as laurylamine hydrochloride or poly(oxy-1,2 ethanediylphenyl)alpha-sulfo-omega-hydroxy ether with phenol 1-(methylphenyl)ethyl derivative ammonium salts; or amphoteric, that is, compounds bearing both anionic and cationic groups, for example, lauryl sulfobetaine; dihydroxy ethylalkyl betaine; amido betaine based on coconut acids; disodium N-lauryl amino propionate; or the sodium salts of dicarboxylic acid coconut derivatives. Typical non-ionic dispersing agents include but not limited to ethoxylated or propoxylated alkyl or aryl phenolic compounds, such as, octylphenoxypolyethyleneoxyEthanol or poly(oxy-1,2-ethanediyl)alpha-phenyl-omega-hydroxy, styrenated. An another dispersing agent may be a mixture of $C_{14}$-$C_{18}$ and $C_{16}$-$C_{18}$ ethoxylated unsaturated fatty acids and poly(oxy-1,2-ethanediyl)alpha-sulfo-omega-hydroxy ether with phenol 1-(methylphenyl)ethyl derivative ammonium salts and poly(oxy-1,2-ethanediyl), alpha-phenyl-omega-hydroxy, styrenated.

Nonionic Dispersing Agents

Exemplary nonionic dispersing agents, also named nonionic tenside, that can be used in coloring bath are alkoxylated, preferably ethoxylated or ethoxylated and propoxylated, fatty acid alkyl esters preferably containing 1 to 4 carbon atoms in the alkyl chain, more particularly the fatty acid methyl esters.

The nonionic low alkoxylated alcohol dispersing agents can be used to reduce surface tension. The alkoxylated alcohol dispersing agents mentioned above includes end caped alkoxylated alcohol dispersing agents.

Exemplary nonionic low alkoxylated alcohol dispersing agents that can be used are alkoxylated alcohols containing 1 to 4 ethylene oxide groups (1-4EO), 1 to 4 butylene oxide groups (1-4BO), 1 to 4 propylene oxide groups (1-4PO), end caped alkoxylated alcohol dispersing agents thereof or mixtures thereof.

Advantageously low alkoxylated alcohols are useful according to the invention, particularly primary and/or branched alcohols, preferably containing 8 to 18 carbon atoms, and containing 1 to 4 ethylene oxide groups (1-4EO), 1 to 4 butylene oxide groups (1-4BO), 1 to 4 propylene oxide groups (1-4PO), end caped alkoxylated alcohol dispersing agents.

Exemplary nonionic higher alkoxylated alcohol dispersing agents suitable for use in the coloring bath are alkoxylated alcohols containing 5 to 40 ethylene oxide groups (5-40EO), butylene oxide groups (5-40BO), propylene oxide groups (5-40PO), preferably 6 to 30 ethylene oxide groups (6-30EO), butylene oxide groups (6-30BO), propylene oxide groups (6-30PO), further preferred 7 to 20 ethylene oxide groups (7-20EO), butylene oxide groups (7-20BO),

propylene oxide groups (7-20PO), more preferred 8 to 10 ethylene oxide groups (8-10EO), butylene oxide groups (8-10BO), propylene oxide groups (8-10PO), and most preferred 8 ethylene oxide groups (8EO), butylene oxide groups (8BO), propylene oxide groups (8PO) groups, end caped alkoxylated alcohol dispersing agents thereof, or mixtures thereof.

Advantageously higher alkoxylated alcohols useful in the coloring bath are particularly linear and/or branched alcohols, preferably containing 8 to 18 carbon atoms, and 5 to 40 ethylene oxide groups (5-40EO), butylene oxide groups (5-40BO), propylene oxide groups (5-40PO), preferably 6 to 30 ethylene oxide groups (6-30EO), butylene oxide groups (6-30BO), propylene oxide groups (6-30PO), further preferred 7 to 20 ethylene oxide groups (7-20EO), butylene oxide groups (7-20BO), propylene oxide groups (7-20PO), more preferred 8 to 10 ethylene oxide groups (8-10EO), butylene oxide groups (8-10BO), propylene oxide groups (8-10PO), and most preferred 8 ethylene oxide groups (8EO), butylene oxide groups (8BO), propylene oxide groups (8PO), end caped alkoxylated alcohol dispersing agents thereof, or may contain a mixture. The alcohol radical may be linear, branched, or may contain a mixture.

Particularly preferred are higher alkoxylated alcohols, preferably alcohol ethoxylates with linear or branched radicals of alcohols with 12 to 18 carbon atoms, e.g. from coco-, palm-, tallow- or oleyl alcohol, containing 8 to 18 carbon atoms, and 5 to 40 ethylene oxide groups (5-40EO), butylene oxide groups (5-40BO), propylene oxide groups (5-40PO), preferably 6 to 30 ethylene oxide groups (6-30EO), butylene oxide groups (6-30BO), propylene oxide groups (6-30PO), further preferred 7 to 20 ethylene oxide groups (7-20EO), butylene oxide groups (7-20BO), propylene oxide groups (7-20PO), more preferred 8 to 10 ethylene oxide groups (8-10EO), butylene oxide groups (8-10BO), propylene oxide groups (8-10PO), and most preferred 8 ethylene oxide groups (8EO), butylene oxide groups (8BO), propylene oxide groups (8PO), end caped alkoxylated alcohol dispersing agents thereof, or may contain a mixture. However, most preferred is isotridecyl alcohol with 6EO to 14EO, 6PO to 14PO, 6BO to 14BO, preferably 7EO to 10EO, 7PO to 10PO, 7BO to 10BO, and most preferred 8EO, 8PO, 8BO, or a mixture thereof.

According to the present invention higher alkoxylated alcohols can be used with 5EO, 6EO, 7EO, 8EO, 9EO, 10EO, 11EO, 12EO, 13EO, 14EO, 15EO, 16EO, 17EO, 18EO, 19EO, 20EO, 21EO, 22EO, 23EO, 24EO or 25EO, 5PO, 6PO, 7PO, 8PO, 9PO, 10PO, 11PO, 12PO, 13PO, 14PO, 15PO, 16PO, 17PO, 18PO, 19PO, 20PO, 21PO, 22PO, 23PO, 24PO or 25PO, 5BO, 6BO, 7BO, 8BO, 9BO, 10BO, 11BO, 12BO, 13BO, 14BO, 15BO, 16BO,17BO, 18BO, 19BO, 20BO, 21BO, 22BO, 23BO, 24BO or 25BO, end caped alkoxylated alcohol dispersing agents thereof, or a mixture thereof.

Exemplary higher alkoxylated alcohols with 5EO to 40EO, preferably 6EO or 30EO, further preferred 7EO to 20EO, more preferred 8EO to 10EO and most preferred 8EO; 5PO to 40PO, preferably 6PO or 30PO, further preferred 7PO to 20PO, more preferred 8PO to 10PO and most preferred 8PO; 5BO to 40BO, preferably 6BO or 30BO, further preferred 7BO to 20BO, more preferred 8BO to 10BO and most preferred 8BO include $C_{12}$-$C_{14}$-alcohols; $C_9$-$C_{11}$-alcohols, $C_{13}$-$C_{15}$- alcohols, $C_{12}$-$C_{18}$-alcohols, end caped alkoxylated alcohol dispersing agents thereof, and mixtures thereof, as well as mixtures of $C_{12}$-$C_{14}$-alcohols and $C_{12}$-$C_{18}$ -alcohols, end caped alkoxylated alcohol dispersing agents thereof, and most preferred is a $C_{13}$-alcohol.

In addition to these nonionic dispersing agents, fatty alcohols containing more than 12 EO, 12 PO, 12 BO may also be used. Examples of such fatty alcohols are tallow fatty alcohol containing 14 EO, 25 EO, 30 EO or 40 EO, 14 PO, 25 PO, 30 PO or 40 PO, 14 BO, 25 BO, 30 BO or 40 BO and end caped alkoxylated alcohol dispersing agents thereof.

The degrees of 5EO to 40EO, 5PO to 40PO, 5BO to 40BO preferably 6EO or 30EO, 6PO or 30PO, 6BO or 30BO,further preferred 7EO to 20EO, 7PO to 20PO, 7BO to 20BO,more preferred 8EO to 10 EO, 8PO to 10 PO, 8BO to 10 BO and most preferred 8EO, 8PO, 8BO alkoxylation mentioned are statistical mean values, which for a special product, may be either a whole number or a fractional number. However, more preferred, the degrees of 5EO to 40EO, 5PO to 40PO, 5BO to 40BO preferably 6EO or 30EO, 6PO or 30PO, 6BO or 30BO further preferred 7EO to 20EO, 7PO to 20PO , 7BO to 20BO, more preferred 8EO to 10 EO, 8PO to 10 PO, 8BO to 10 BO and most preferred 8EO, 8PO, 8BO alkoxylation mentioned may be either a whole number or a fractional number. Most preferred, the degrees of 5EO to 40EO, 5PO to 40PO, 5BO to 40BO, preferably 6EO or 30EO, 6PO or 30PO, 6BO or 30BO, further preferred 7EO to 20EO, 7PO to 20PO, 7BO to 20BO, more preferred 8EO to 10 EO, 8PO to 10PO, 8BO to 10BO and most preferred 8EO, 8PO, 8BO. The alkoxylation grade mentioned may be a whole number.

Preferred higher alkoxylated alcohols have a narrow homolog distribution (narrow range ethoxylates, NRE).

Further dispersing agents include alkoxylated long chain fatty acid amides where the fatty acid has 8-20 carbon atoms and the amide group is alkoxylated with 1-20 ethylene oxide, propylene oxide and/or butylene oxide units.

A further class of nonionic dispersing agents, which can be used in the coloring bath, is that of the alkyl polyglycosides (APG). Suitable alkyl polyglycosides satisfy the general Formula RO(G)z where R is a linear or branched, particularly 2-methyl-branched, saturated or unsaturated aliphatic radical containing 8 to 22 and preferably 12 to 18 carbon atoms and G stands for a glycose unit containing 5 or 6 carbon atoms, preferably glucose. The degree of oligomerization z is a number between 1.0 and 4.0 and preferably between 1.1 and 1.4.

Silicone containing nonionic dispersing agents, such as the ABIL B8852 or Silwet 7602, can also be used. An exemplary silicone-containing dispersing agent is silicone polybutane.

Examples of amine oxide dispersing agents include: dimethyldodecylamine oxide, dimethyltetradecylamine

oxide; ethylmethyltetradecylamine oxide, cetyldimethylamine oxide, dimethylstearylamine oxide, cetylethylpropylamine oxide, diethyldodecylamine oxide, diethyltetradecylamine oxide, dipropyldodecylamine oxide, lauryl dimethyl amine oxide, bis- (2-hydroxyethyl) dodecylamine oxide, bis- (2-hydroxyethyl)-3-dodecoxy-1-hydroxypropyl amine oxide, (2-hydroxypropyl) methyltetradecylamine oxide, dimethyloleyamine oxide, dimethyl- (2-hydroxydodecyl) amine oxide, and the corresponding decyl, hexadecyl and octadecyl homologs of the above compounds.

Additional nitrogen-containing dispersing agents include ethoxylated primary alkyl amines where the alkyl group has 10-20 carbon atoms and the amine is ethoxylated with 2-20 ethylene oxide units.

Additionally, non-ionic dispersing agents derived from the condensation of ethylene oxide with the product resulting from the reaction of propylene oxide and ethylene diamine are also useful in the coloring bath. For example, there are compounds containing from 40% to 80% of polyoxyethylene by weight and having a molecular weight from 5,000 to 11,000 resulting from the reaction of ethylene oxide groups with a hydrophobic base constituted of the reaction product from ethylene diamine and excess propylene oxide wherein the base has a molecular weight on order of 2,500-3, 000.

Suitable nonionic dispersing agents include the polyoxyethylene-polyoxypropylene condensates, which are sold by BASF under the trade name 'Pluronic', polyoxyethylene condensates of aliphatic alcohols/ethylene oxide condensates having from 1 to 30 moles of ethylene oxide per mole of coconut alcohol; ethoxylated long chain alcohols sold by Shell Chemical Co. under the trade name 'Neodol', polyoxyethylene condensates of sorbitan fatty acids, alkanolamides, such as the monoalkoanolamides, dialkanolamides and the ethoxylated alkanolamides, for example coconut monoEthanolamide, lauric isopropanolamide and lauric diEthanolamide; and amine oxides for example dodecyldimethylamine oxide.

Further exemplary non-ionic dispersing agents include alkylphenol alkoxylates, and amine oxides such as alkyl dimethylamine oxide or bis (2- hydroxyethyl) alkylamine oxide.

The nonionic dispersing agents can be provided in the coloring bath in an amount of $\geq$ 0 wt.-% to $\leq$ 40 wt.-%, preferably $\geq$ 0.1 wt.-% to $\leq$ 35 wt.-%, further preferred $\geq$ 0.5 wt.-% to $\leq$ 32 wt.-%, and more preferred 1.0 wt.-% to 30 wt.-%, based on the weight of all components of the total composition.

It should be understood that the addition of the nonionic dispersing agent to the coloring bath can be omitted.

Anionic Dispersing Agents

Exemplary anionic dispersing agents, also named anionic tensides, that can be used include organic carboxylates, organic sulfonates, organic sulfates, organic phosphates and the like, particularly linear alkylaryl sulfonates, such as alkylarylcarboxylates, alkylarylsulfonates, alkylarylphosphates, and the like. These classes of anionic dispersing agents are known within as linear alkyl benzyl sulfonates (LABS), alpha olefin sulfonates (AOS), alkyl sulfates, and secondary alkane sulfonates.

The anionic dispersing agents can be provided in the coloring bath in an amount of $\geq$ 0 wt.-% to $\leq$ 40 wt.-%, preferably $\geq$ 0.1 wt.-% to $\leq$ 35 wt.-%, further preferred $\geq$ 0.5 wt.-% to $\leq$ 32 wt.-%, and more preferred 1.0 wt.-% to 30 wt.-%, based on the weight of all components of the total composition.

It should be understood that the addition of the anionic dispersing agent to coloring bath can be omitted.

Cationic Dispersing Agents

In a preferred embodiment of the coloring bath comprises a cationic dispersing agent, also named cationic tenside.

Suitable cationic dispersing agents include quaternary ammonium compounds having the formula of $RR'R''R'''N^+X^-$, where R, R', R" and R'" are each a $C_1$-$C_{24}$ alkyl, aryl or arylalkyl group that can optionally contain one or more P, O, S or N heteroatoms, and X is F, Cl, Br, I or an alkyl sulfate. Additional preferred cationic dispersing agents include ethoxylated and/or propoxylated alkyl amines, diamines, or triamines.

Each of R, R', R" and R'" can independently include, individually or in combination, substituents including 6 to 24 carbon atoms, preferably 14 to 24 carbon atoms, and more preferably, 16 to 24 carbon atoms.

Each of R, R', R" and R'" can independently be linear, cyclic, branched, saturated, or unsaturated, and can include heteroatoms such as oxygen, phosphorous, sulfur, or nitrogen. Any two of R, R', R" and R'" can form a cyclic group. Any one of three of R, R', R" and R'" can independently can be hydrogen. X is preferably a counter ion and preferably a non-fluoride counter ion. Exemplary counter ions include chloride, bromide, methosulfate, ethosulfate, sulfate, and phosphate.

In an embodiment, the quaternary ammonium compound includes alkyl ethoxylated and/or propoxylated quaternary ammonium salts (or amines).

Preferably, the alkyl group contains between about 6 and about 22 carbon atoms and can be saturated and/or unsaturated. The degree of alkoxylation is preferably between about 2 and about 20, and/or the degree of propoxylation

is preferably between about 0 and about 30. In an embodiment, the quaternary ammonium compound includes an alkyl group with about 6 to about 22 carbon atoms and a degree of alkoxylation between about 2 and about 20.

The cationic dispersing agents can be provided in coloring bath in an amount of ≥ 0 wt.-% to ≤ 40 wt.-%, preferably ≥ 0.1 wt.-% to ≤ 35 wt.-%, further preferred ≥ 0.5 wt.-% to ≤ 32 wt.-%, and more preferred 1.0 wt.-% to 30 wt.-%, based on the weight of all components of the total composition.

It should be understood that the addition of the cationic dispersing agent to the coloring bath can be omitted.

Amphoteric Dispersing Agents

The coloring bath can also comprise an amphoteric dispersing agent.

Examples of suitable amphoteric dispersing agents include capryloamphopropionate, disodium lauryl B-iminodipropionate, and cocoamphocarboxypropionate, and disodium octylimino dipropionate.

The amphoteric dispersing agents can be provided in the coloring bath in an amount of ≥ 0 wt.-% to ≤ 40 wt.-%, preferably ≥ 0.1 wt.-% to ≤ 35 wt.-%, further preferred ≥ 0.5 wt.-% to ≤ 32 wt.-%, and more preferred 1.0 wt.-% to 30 wt.-%, based on the weight of all components of the total composition.

It should be understood that the addition of the amphoteric dispersing agent to the coloring bath can be omitted.

Solubilizer

The solubilizer is selected different to the dispersing agent and the levelling agent and may be used in addition to the dispersing agent and/or levelling agent. The solubilizer is at least partially soluble at 23 °C in the aqueous coloring bath and may be selected from the group comprising a $C_1$ to $C_6$ alcohol, $C_2$ to $C_{20}$ organic acid, $C_3$ to $C_6$ ketone, $C_3$ to $C_5$ aldehyde, $C_1$ to $C_6$ alkyl, $C_3$ to $C_6$ ester, alkylene glycol alkyl ether, glycol alkyl ether; preferably glycol and glycol oligomers, ethanol, acetone, formic or acetic acid, dimethylformamide or dimethylsulfoxide.

Furthermore, the solubilizer may be a compound according to the following formula $R'-[(O(CH_2)_m)_n-]OH$, wherein R' is an ethyl, propyl or butyl radical, m is 2, 3 or 4, and n is 1, 2 or 3, with the proviso that where R' is butyl m is 2 or 4. The solubilizer may be selected from the group consisting of ethylene glycol butyl ether, diethylene glycol ethylether, diethylene glycol butylether, propylene glycol propylether, dipropylene glycol propyl ether and tripropylene glycol propylether.

Furthermore, the solubilizer may be a compound according to the following formula $H-[(O(CH_2)_m)_n-]OH$, where m is 2, 3 or 4 and n is 1, 2, or 3. The solubilizer may be selected from the group consisting of diethylene glycol, triethylene glycol and 1,4 butanediol. Preferably the solubilizer forms a homogenous solution with water.

Levelling agent

The levelling agent is selected different to the dispersing agent and the solubilizer and may be used in addition to the dispersing agent and/or solubilizer.

With respect to result of the coloring process it may be advantageous when the coloring bath further comprises a levelling agent. According to another embodiment the coloring bath comprises a levelling agent, wherein the levelling agent is preferably selected from the group comprising aromatic esters such as benzoic esters such as benzyl benzoat or phthalic acid esters, polyphenylether, phenoles, aromatic alcohols, aromatic ketones, aryl halides, such as halogenized benzene, halogenzide toluene; N-alkylphthalimide, methylnaphthaline, diphenyle, diphenylethere, naphtholether, and oxybiphenyle. Levelling agents may also be of natural origin such as coumarin or vanillin.

Preferably the levelling agent does not form a homogenous solution with water. The levelling agent may decrease the time that is used for coloring and/or enhance the penetration capacity of the dye.

Temperature

It may be preferred that the coloring bath has a temperature adjusted according to specific properties of the uncolored plastic article and/or the plastic basis material. Preferably, the coloring bath has a temperature higher than a glass-transition temperature $T_g$ of the uncolored plastic article and preferably of the plastic basis material; and/or the coloring bath has a temperature lower than a heat deflection temperature of the uncolored plastic article and preferably of the plastic basis material. This may have the advantages that distortion or deforming of the plastic basis material and/or the uncolored plastic article may be avoided and the dying process is speeded up.

The heat deflection temperature also called heat distortion temperature may be the temperature at which the plastic basis material deforms under a specified load. It may be determined by the following test procedure outlined in ASTM D648. The test specimen is loaded in three-point bending in the edgewise direction. The outer fiber stress used for testing is either 0.455 MPa or 1.82 MPa, and the temperature is increased at 2 °C/min until the specimen deflects

0.25 mm.

Alternative the heat deflection temperature also called heat distortion temperature (HDT) may be measured according to DIN EN ISO 75-1 to 3. In this test, the test specimen is loaded according to the three-point bending principle, which means that the bending moment is not constant over the length of the test specimen, but rather increases from the support points to the point of application of the individual load. For plastics and hard rubber according to DIN EN ISO 75-2, the individual load is dimensioned so that a maximum bending stress of 1.80 MPa (method A), 0.45 MPa (method B) or 8.0 MPa (method C) is present. The heating takes place at a heating rate of 2 °C/min, with air or silicone oil usually being used as the heat carrier.

The glass transition temperature $T_g$ may be the gradual and reversible transition in amorphous regions of the plastic basis material from a hard and relatively brittle state into a viscous or rubbery state as the temperature is increased. The glass transition temperature $T_g$ of the plastic basis material and/or the uncolored plastic article may be determined by differential scanning calorimetry (DSC), which is a thermoanalytical technique in which the difference in the amount of heat required to increase the temperature of a sample and reference is measured as a function of temperature.

The glass transition temperature $T_g$ of the plastic basis material and/or the uncolored plastic article may be determined according to the following standards: DIN 51007 (Thermal Analysis - Differential Thermal Analysis and Differential Scanning Calorimetry - General Principles), ASTM E 474, ASTM D 3418, DIN EN ISO 11357-1 (Plastics - Differential Scanning Thermal Analysis Part 1: General principles. (2008)), ISO 11357-2 (Plastics - Differential Scanning Calorimetry Part 2: Determination of the glass transition temperature. (1999)), ISO / DIS 11357-3 (Plastics - Differential Scanning Calorimetry Part 3: Determination of the melting and crystallization temperature and the melting and crystallization enthalpy. (2009)), ISO 11357-4(Plastics - Differential Scanning Thermal Analysis (DSC) Part 4: Determination of specific heat capacity. (2005)).

The glass transition temperature $T_g$ of the plastic basis material and/or the uncolored plastic article may be determined using a Mettler Toledo DSC 3+ differential calorimeter, a sample amount of 10 +/- 1 mg, nitrogen as purge gas, and the following settings: 1. Heating: -40 °C to 280 °C with 20 °C/min, Hold: 3 minutes at 200 °C, Cooling: 280 °C to -40 °C at 10 °C/min, Hold: 5 minutes at -20 °C, 2. Heating: -40 °C to 300 °C at 20 °C/min.

Time

According to an another embodiment the surface of the uncolored plastic article, may be exposed to the coloring bath for about ≥ 1 second to about ≤ 60 minutes, preferably about ≥ 3 seconds to about ≤ 30 minutes, in addition preferred about ≥ 5 seconds to about ≤ 10 minutes, and also preferred about ≥ 10 seconds to about ≤ 1 minute, or about ≥ 15 seconds to about ≤ 30 seconds. However it is preferred that the surface of the uncolored plastic article, may be exposed to the coloring bath for about ≥ 1 second to about < 10 minutes, preferably about ≥ 2 seconds to about ≤ 8 minutes, in addition preferred about ≥ 5 seconds to about ≤ 6 minutes, and also preferred about ≥ 10 seconds to about ≤ 4 minutes, or about ≥ 15 seconds to about ≤ 2 minutes.

In general the surface of the uncolored plastic article is completely colored at about ≥ 1 second to about < 10 minutes, preferably about ≥ 2 seconds to about ≤ 8 minutes, in addition preferred about ≥ 5 seconds to about ≤ 6 minutes, and also preferred about ≥ 10 seconds to about ≤ 4 minutes, or about ≥ 15 seconds to about ≤ 2 minutes, that means the colorized surface of the plastic article has a color defined by the dye.

As already mentioned above, the coloring of the plastic article can also be carried out during the production of the article by means of a masterbatch, whereby the article is either completely colored (article consists if single layer or multiple layers) or only partially colored, i.e. individual layers are colored (article consists of multiple layers).

**b) Generating the migration barrier**

As already mentioned, in the method for stabilizing the dye in the colored plastic article the migration barrier is generated by exposing the colored surface of the colored plastic article to ionizing radiation, such that the depth-dose distribution in the colored surface comprises its maximum radiation dose at a depth of ≥ 0 µm to ≤ 10 µm, preferably > 1 µm to ≤ 10 µm, more preferably > 2 µm ≤ 10 µm of the colored surface.

The depth-dose describes the dose of radiation at a distance beneath the surface of the colored plastic article, including secondary radiation and/or scatter. Thus, the depth-dose distribution describes the absorbed dose deposited by the ionizing radiation into the colored plastic article as it varies with depth along the propagation axis of the ionizing radiation.

As the particles of the ionizing radiation - preferably the electrons - lose energy on their way through the colored plastic article, their ability to trigger chemical reactions diminishes with increasing depth. On the other hand, the probability of an interaction of the particles of the ionizing radiation with the colored plastic article is lower for fast particles than that for slow particles. Thus, the dose of radiation along the propagation axis of the ionizing radiation has its maximum inside the colored plastic article rather than at the surface of the colored plastic article. The depth-does distribution is at least

influenced by the type plastic basis material and by the incident energy of the particles of the ionizing radiation. The depth-dose distribution for a given plastic basis material can be determined by Monte-Carlo simulation.

The colored surface of the colored plastic article that is exposed to the ionizing radiation can be any colored surface of the colored plastic article. In other words, in case the plastic article has an inner and an outer surface, the colored outer surface of the colored plastic can be exposed to the ionizing radiation and/or the colored inner surface of the plastic article can be exposed to the ionizing radiation. It is also possible to expose both, the colored inner and the colored outer surface of the colored plastic, if required.

With regard to the ionizing radiation and according to a preferred embodiment of the invention, the ionizing radiation is an electron beam, beta radiation and/or gamma radiation. For generating the electron beam an electron gun can be used. Alternatively, beta radiation, i.e. electrons or positrons emitted by a radioactive decay of an atomic nucleus during beta decay can be used. The surface of the colored plastic article can also be irradiated with gamma radiation, i.e. electromagnetic radiation having a wavelength shorter than 0.005 nm. The gamma radiation may arise from radioactive decay. Preferably the ionizing radiation is an electron beam and/or beta radiation. More preferably the ionizing radiation is an electron beam generated by an electron accelerator comprising the electron gun.

As already mentioned, exposing the colored surface of the colored plastic article to ionizing radiation leads to the generation of the migration barrier close to the surface that is exposed to the ionizing radiation. In order to form the migration barrier within the plastic basis material and close to the surface the maximum of the depth-dose distribution in the colored surface is at a depth of $\geq 0$ $\mu$m to $\leq 10$ $\mu$m preferably $> 1$ $\mu$m to $\leq 10$ $\mu$m, more preferably $> 2$ $\mu$m $\leq 10$ $\mu$m of the colored surface. Furthermore, the absorbed radiation dose needs to be high enough in order to crosslink the plastic basis material and/or the crosslinking-agent. In general, the absorbed dose determines the cross-linking density of the plastic (the higher the dose, the higher the cross-linking density), wherein the speed of the electrons, i.e. the incident electron energy, determines the maximum penetration depth and thus the maximum depth at which cross-linking reactions are initiated (the higher the speed, the higher the penetration depth).

With regard to the above, the radiation dose depends on the radiation exposure of the electron beam and on the type of plastic basis material used in particular on the ionizing energy of the plastic basis material. In connection to this and according to a preferred embodiment of the invention the ionizing radiation is an electron beam and the radiation dose is 10 kGy to 300 kGy, preferably 50 kGy to 250 kGy and more preferably 80 kGy to 150 kGy. These radiation doses are high enough that the migration barrier is formed without causing detrimental effects on the colored plastic article and/or the plastic basis material. Furthermore, the radiation dose of 80 kGy to 150 kGy ensures that the migration barrier is generated.

With regard to a distance of an emitter window of the electron accelerator to the colored plastic article and according to a preferred embodiment of the invention the ionizing radiation is an electron beam and the distance of the emitter window of an electron accelerator to the colored plastic surface is 10 mm to 750 mm, preferably 20 mm to 50 mm and more preferably 30 mm to 45 mm. These distances ensure that the electrons in the electron beam have the appropriate speed to generate the migration barrier close to the surface of the colored plastic article.

Preferably, the electron accelerator used for generating the electron beam and irradiating the colored plastic article comprises an irradiation chamber in which the colored plastic article is irradiated. It is possible that the irradiation chamber is evacuated before irradiation of the colored plastic article. However, according to a preferred embodiment of the invention the irradiation chamber is not evacuated. This is possible, because the distance between the emitter window of an electron accelerator to the colored plastic article is 10 mm to 750 mm, preferably 20 mm to 50 mm and more preferably 30 mm to 45 mm - in other words a rather short distance. The possibility not to evacuated the irradiation chamber simplifies the irradiation of the colored plastic article drastically.

As already mentioned, the incident electron energy i.e. the kinetic energy of the electrons that impact on the colored surface of the colored plastic article, influence the generation of the migration barrier and can be controlled by the acceleration voltage of the electron accelerator. To this regard and according to a preferred embodiment of the invention the ionizing radiation is an electron beam and the acceleration voltage of the electron accelerator is 25 kV to 250 kV, preferably 50 kV to 175 kV, and more preferably 80 kV to 125 kV. Using an electron beam having such acceleration voltage has the advantage that the penetration depth of the electron beam is confined to an outer layer of the irradiated surface of the colored plastic article. Thus, the depth-dose distribution in the colored surface comprises its maximum radiation dose at a depth of $\geq 0$ $\mu$m to $\leq 10$ $\mu$m of the colored surface and the migration barrier is generated in the outer layer ensuring a high color stability of the plastic article. Furthermore, such acceleration voltage ensure that the migration barrier is thin, meaning that a migration barrier has a thickness of preferably 2 $\mu$m to 10 $\mu$m. Thus, the amount of dye trapped in the migration barrier which corresponds to the dye which may not be retrieved during the recycling process is low.

In connection with exposing the colored surface of the colored plastic article to the ionizing radiation and according to a preferred embodiment of the invention, the colored surface of the colored plastic article is exposed to the ionizing radiation by passing the colored plastic article on a conveyer trough the ionizing radiation. This has the advantage that the migration barrier is generated with high reliability in a simple process. Preferably, an electron accelerator is used

for exposing the colored surface of the colored plastic article to the ionizing radiation. In this regard a direct dc accelerator, a single cavity accelerator, and/or a linear accelerator may be used.

In connection to the conveyor and according to a preferred embodiment of the invention the colored plastic article on the conveyor has a speed of 0.5 m/min to 60 m/min, preferably of 1 m/min to 50 m/min, more preferably of 5 m/min to 25 m/min. Even more preferably the speed of the conveyor and thus the speed of the colored plastic article on the conveyor is chosen according to an electron beam current and a power of the electron beam.

## Plastic article and color stability of plastic article

Not only different plastic forming processing methods can be used in order to provide the colored plastic article, but also different types of colored plastic articles and/or uncolored plastic articles may be used in the process. According to preferred embodiments of the invention, the colored plastic article is selected from the group comprising a sheet, a foil, a container, a part, a tube, a profile, a non-woven fabric, and preferably the article is selected from the group comprising rigid packaging such as bottles or jars, color coded packaging and containers of all types, including ones for industrial components, computer face-plates, keyboards, bezels and cellular phones, residential and commercial lighting fixtures and components therefor, such as sheets, used in building and in construction, tableware, including plates, cups and eating utensils, small appliances and their components, optical and sun-wear lenses, as well as decorative films including such films that are intended for use in film insert molding.

In case the colored plastic article is provided by exposing a surface of the uncolored plastic article to a coloring bath comprising the dye, preferably the plastic article comprises in the colored surface a colored layer having a thickness of ≥ 5 μm. This ensures a satisfying color quality of the colored plastic article.

As already mentioned, due to the migration barrier the colored plastic article has an enhance color stability. In this regard and according to a preferred embodiment of the invention, the plastic article comprises in a surface layer having a thickness of 2 μm to 10 μm a degree of crosslinking of 10 % to 85 %, preferably of 50 % to 85 %, more preferably of 65 % to 85 %. Preferably the degree of crosslinking is measured by a swelling test, according to ASTM D2765, ASTM F2214, ISO 10147, and/or DIN 16892.

As already mentioned, the colored plastic article is not only easily recyclable but also color stable, meaning the migration of the dye in the plastic is strongly reduced. According to a preferred embodiment of the invention the colored plastic article is color stable under any or any combinations of the following conditions:

- exposure to water for 12 h at 65 °C;
- exposure to a 2 % alkaline solution of NaOH for 8 h at 80 °C;
- exposure to a 3 % acid solution of acetic acid for 2 h at 50 °C;
- fastness to washing acc. to DIN EN ISO 105-C06 C2S;
- fastness to perspiration acc. to DIN EN ISO 105-E04;
- exposure to a solution of 20 % ethanol and 3 % acetic acid in water for 24 h at 50 °C.

To this regard and according to another preferred embodiment the colored plastic article is color stable under the food safety requirements defined by any or any combination of the following norms: DIN 16524-2, CEI 05-59; DIN 16524-1 to DIN 16524-3, JN 16-80; DIN 10955; DIN 16524-3, CEI 11-60; DIN 16524-3, CEI 08-60; CEI 20-80; JN 17-80; DIN 16525, CEI 19-79; DIN 16524-1; DIN 53415; DIN 16524-3, CEI 10-60; DIN 53375; CEI 18-77; DIN 16524-2, CEI 06-59; DIN 16524-3, CEI 09-60; DIN 53415; DIN 16524-2, CEI 07-59; and DIN 16524-1, CEI 03-59.

Being color stable preferably means, that the remaining color strength after being exposed to one of the above conditions and/or norms is ≥ 75%, preferable ≥ 85%, more preferably ≥ 95%. The remaining color strength is the percentage loss of color strength K/S according to Kubelca-Munk of the plastic article before and after the migration test. Color strength according to Kubelca-Munk can be determined by the spectrophotometer Konica-Minolta 3600A at maximum absorbance. In addition, or alternatively to detecting the color change of the plastic article, the color stability of the plastic article can be determined by detecting the color change of the extraction medium of the extraction test and/or the color change of a polar decoloring agent as dye absorbing agent that is added to the extraction medium prior the test. In this regard the color change of the extraction medium and/or the polar decoloring agent is determined by visual inspection based on DIN ISO 105 A03 and A02. Preferably with regard to this assessment, the plastic article is considered color stable when 2 or less points are assigned in the visual inspection (see table 3). The polar decoloring agent as dye absorbing agent preferably is poly amide (PA6, melting point 220°C, viscosity number (acc. to ISO307; 96% sulfuric acid) 187 -203 g/cm$^3$; spherical granulate with diameter 2.0 - 2.5mm).

## Partially colored plastic article

As already mentioned, the cross-linking of the plastic by ionising radiation creates a migration barrier from or

through which the dyes cannot migrate, so that the colored plastic article has an enhanced color stability. The cross-linking of the plastic by ionising radiation before coloring the plastic article by means of a coloring bath also has the effect that the dyes can no longer migrate into the surface of the plastic article. In the dye bath, the cured surface of the plastic article retains its own color, only the surrounding surface is colored. In this way, for example, negative fonts can be created. A second radiation curing by ionising radiation then cross-links the dyed surface as described before.

## Decoloring conditions

As already mentioned, it is also an object of the invention to provide a method for decolorizing the colored plastic article comprising the steps of

- shredding the colored plastic article to a granulate and/or a powder,
- exposing the granulate and/or powder to a decoloring bath for at least partial decoloration,
- heating the at least partly decolored granulate and/or powder above a melting temperature $T_m$ of the plastic basis material for providing a polymer melt, and
- filtering off solid parts in the polymer melt by a melt filter.

In other words, the colored plastic article is decolorizabel under the above decoloring conditions. Being decolorizable preferably means that the process allows to reuse at least 85 % of the plastic basis material after decolorization.

For recycling of the plastic article, the colored plastic article is shredded into small granulates, flakes, and/or a powder which subsequently are exposed to the decoloring bath and then treated by a heating and filtering step. The recycling process is based on two characteristics of the colored plastic article. Due to the low molecular weight dye used for coloring the plastic article, it is possible to decolor the plastic article with a decoloring bath. The dye in the plastic basis material is able to migrate out of the plastic basis material into the decoloring bath, thus leading to a decoloration of the granulate, flakes and/or powder. Only the dye within the migration barrier may not be able to migrate and thus these parts of the granulates, flakes and/or powder may only be partly decolored or not decolored at all. However, since the migration barrier in the plastic article - which is responsible for the improved color stability of the colored plastic article - has different thermophysical properties than the plastic basis material, it is possible to separate the decolored plastic basis material from the only partially decolored migration barrier by a heating and filtering process. When heating the partly decolored granulate, flakes and/or powder above the melting temperature $T_m$ of the plastic basis material, the plastic basis material - which is decolored - melts to a polymer melt. However, the migration barrier - which is only partly decolored or not decolored at all - does not melt and stays solid. Thus, in the subsequent filtering step, the dye trapped within the migration barrier, is filtered along with the migration barrier itself from the decolored polymer melt. Since in the method for stabilizing the dye in the colored plastic article only a thin migration barrier is generated, the majority of the plastic basis material, preferably at least 85 %, can be recovered after the decoloration process and reused. Only a small amount - i.e. the migration barrier - is lost during the recycling process. Furthermore, the migration process of the dye out of the plastic basis material also enables to reuse the dye itself. Again, since in the method for stabilizing the dye in the colored plastic article only a thin migration barrier is generated, a majority of the dye, preferably > 50 %, can be recovered and only a small amount is trapped within the migration barrier.

According to a preferred embodiment of the invention the colored plastic article is shredded to a granulate, flake or powder having a mean particle size of 0.1 mm to 40 mm, further preferred 0.2 mm to 20 mm and most preferred 0.25 mm to 15 mm. A low particle size enables for a fast decoloring in the decoloring bath.

As already mentioned, the dye trapped within the migration barrier may not be able to migrate and thus after the treatment in the decoloring bath these parts of the granulate, flake and/or powder may only be partly decolored or not be decolored at all. However, since these parts are also the parts that stay solid in the subsequent heating step a separation is possible. In this regard and according to a preferred embodiment of the invention at least some of the solid parts are at least partly colored.

### Decoloring bath

With regard to the decoloring of the granulate, flakes and/or powder a decoloring bath is used. According to a preferred embodiment of the invention the decoloring bath comprises a polar solvent, wherein the polar solvent comprises and/or is exposed to at least one polar decoloring agent for desorption of the dye and absorbing and/or adsorbing the dye from the granulate, flake and/or powder. The decoloring of the colored plastic article, is based on the use of a polar decoloring agent for absorbing and/or adsorbing, may be also named desorbing, the dye from the colored plastic article. The dye, having a molecular weight Mw in the range of about ≥ 250 g/mol to about ≤ 750 g/mol, is not a chemical reactive dye that forms a chemical covalent bond to the plastic basis material, so that the dye may migrate out of the colored plastic article and is then absorbed and/or adsorbed by the polar decoloring agent.

To assist the decolorization and/or migration process of the dye out of the plastic basis material the polar solvent comprises and/or is exposed to the at least one polar decoloring agent. The dye may have an enhanced interaction with the polar decoloring agent compared to the plastic basis material and therefore is likely to migrate out of the plastic basis material. Preferably, the polar decoloring agent used for decolorization is free or only comprises traces of a dye.

The enhanced interaction of the dye with the polar decoloring agent may be achieved based on different characteristics compared with the colored plastic article and/or with the plastic basis material. The different characteristics of the polar decoloring agent compared to the colored plastic article and/or the plastic basis material can be physical characteristics or chemical characteristics or combinations thereof that increases the desorption from of the dye from the colored plastic article and/or the plastic basis material and/or increases the strength of the ab- and/or adsorption of the dye to the decoloring agent compared with the strength of ab- and/or adsorption of the dye to the colored plastic article and/or plastic basis material. Different characteristics of the polar decoloring agent may be a more open pore structure, higher free volume, lower $T_g$, greater surface, higher polarity, a polarity that is more similar to the polarity of the dye, and/or being free of dye.

According to a preferred embodiment the polar decoloring agent may be more polar than the plastic basis material, the polar-polymer, the polar compound, and/or the carrier. The polar decoloring agent may be in a solid or in a liquid state.

Besides absorption and adsorption of the dye by the polar decoloring agent, it is also possible to use chemical reduction or oxidation processes of the dye in the decoloring bath to enhance migration of the dye out of the granulates, flakes and/or powder. The destruction of the dye in the decolorizing bath also promotes the migration of the dye out of the plastic article by removing the dye from the decolorizing bath and the associated shift of the equilibrium "dye in plastic article" to "dye in decolorizing bath". In this case, in addition or alternatively to the above described, the decoloring bath comprises a polar solvent, wherein the polar solvent comprises and/or is exposed to an oxidizing or reducing agent.

The use of levelling agents not only promotes the coloring of the plastic articles in the coloring bath, but also the decoloring of the plastic articles in the decolorizing bath. Thus, according to a preferred embodiment, the decoloring bath further comprises in addition to the polar decoloring agent and/or in addition to the oxidizing or reducing agent a leveling agent.

Polar decoloring agent

With respect to the polar decoloring agent it may be advantageous to select the polar decoloring agent selected from the group comprising:

- at least one polar-polymer having a Mw of about ≥ 1000 g/mol, and/or
- at least one polar compound having a Mw of about < 1000 g/mol,

wherein the polar decoloring agent before used in the decolorization process is preferably free of a dye.

The molecular weight of the polar decoloring agent for the desorption of the dye from the colored plastic article and/or plastic basis material and/or absorbing and/or adsorbing the dye from the colored plastic article and/or plastic basis material may be lower than the molecular weight of the polar polymer of the plastic basis material.

In case the polar decoloring agent is solid, the particle size of the polar decoloring agent may be less than the particle size of the granulate generated from the colored plastic article. Preferably the particles size of the granulate of the colored plastic article differs from the particle size of the solid polar decoloring agent such that a separation of the granulate generated from the colored plastic article from the solid decoloring agent is possible using a sieve.

According to an embodiment the dye is not destroyed during the process of decolorization of the colored plastic article and/or of the plastic basis material. That allows the reuse of the dye obtained by the process of decolorization.

In other words, the polar decoloring agent differs from the colored plastic article and/or plastic basis material. The decolorization of the colored plastic article and/or plastic basis material may be based on a shift of the dynamic equilibrium, due to a higher concentration of polar-polymer and/or polar compound in the polar decoloring agent than in the colored plastic article and/or plastic basis material.

The adsorption and/or absorption of the dye to the polar decoloring agent may be enforced by increasing the amount of electrostatic interaction between dye and the polar decoloring agent. According to a preferred embodiment the polar decoloring agent may comprise polar, acidic, and/or basic groups, wherein polar groups for electrostatic interaction are preferred. More preferred the polar decoloring agent may comprise polar groups selected from the group comprising sulfonyl group, such as tosyl-, brosyl-, nosyl-, mesyl-, trifyl-, tresyl-, and dansyl-, hydroxyl group, amine groups including primary-, secondary-, and tertiary amines, carboxylic groups, imine and enamine groups, ketone groups, carbonyl groups, aldehyde groups, organic amide groups such as sulfone amides and phosphor amides, organic halide groups, and/or carbamate groups.

Preferably the polar decoloring agent is solid at the temperature of the decolorizing process. According to a

preferred embodiment the polar decoloring agent may have the form of flakes, particles, granulates. Preferably the particles, granulates, flakes of the polar decoloring agent may have a mean particle size diameter of 0.01 mm to 100 mm, further preferred 1 mm to 8 mm and also preferred 2 mm to 5 mm. Further preferred the polar decoloring agents are nano-particles, preferably with a mean particle size of about ≥ 1 nm to about ≤ 100 nm. With regard to the form the particles, granulates, flakes of the polar decoloring agent may preferably not have a round shape (worst ratio surface to volume). However, in case nano-particles are used, round shapes may be possible. The design of the polar decoloring agent may have cylindrical form or any other design. Furthermore, it is preferred that the particles, granulates, flakes and/or nano-particles are arranged on or in a surface of a solid substrate. It seems to be important that the shape should be selected such that the ratio surface:volume may be as large as possible.

Having a solid polar decoloring agent in the form of flakes, particles and/or granulates has the advantage that it is possible to filter off the polar decoloring agent. Furthermore, the size of the solid polar decoloring agent is different from the size of the granulates of the colored plastic article to be decolored, such that a separation of the polar decoloring agent from the granulates of the colored plastic article by sieve is possible

However, separation of the polar decoloring agent may also be possible by arranging the polar decoloring agent on or in the surface of a solid substrate. In order to exploit a high surface to volume ratio, it may be preferred to have the polar decoloring agent as nano-particles arranged on the surface of a solid substrate.

In the context of separating the polar decoloring agent from the polar solvent and from the granulates of the colored plastic article and according to a preferred embodiment the polar decoloring agent may get a density below the density of the polar solvent, due to the absorption and/or adsorption of the dye, having a molecular weight Mw in the range of about ≥ 250 g/mol to about ≤ 750 g/mol. Thus, the colored polar decoloring agent may be separated from the polar solvent. It may be possible that the density of the polar decoloring agent changes by absorbing and/or adsorbing of the dye. The density of the polar decoloring agent may increase above the density of the polar solvent. Therefore, due to absorption and/or adsorption of the dye the polar decoloring agent may sink onto the bottom of a reaction vessel and may be easily separated from the polar solvent, while the granulates generated from the colored plastic article stay in the polar solvent.

Oxidizing and reducing agents for the destruction of the dye

According to an embodiment, the dye of the plastic article that dissolve in the polar solvent can alternatively or in addition be destroyed by a chemical oxidation or reduction reaction. This shifts the equilibrium by destroying the dyes from the plastic article.

Preferred oxidizing agents are selected from the group comprising of peroxide, peroxyacetic acid, hydrogen peroxide, ozone, sodium percarbonate, sodium perborate, sodium percarbonate, *m*-Nitrobenzolsulfonat, $H_2SO_4$, $HNO_3$, oxygen-containing anions (oxo anions) of transition metals in high oxidation states such as permanganate $MnO4^-$, $KMnO_4$, phosphate, oxygen difluoride fluorine, cryptone difluoride, dichromate $Cr_2O_7^{2-}$, metal ions such as $Ce_4^+$, noble metal ions such as those of silver and copper, anions of halo-oxygen acids such bromat $BrO_3^-$, halogens, such as fluorine, chlorine, bromine and iodine, hypochlorite, sodium hypochlorite, and/or potassium hypochlorite;

Preferred reduction agents are selected from the groups comprising hydrides, H-, NaH, lithium aluminum hydride, sodium hydride, hydrogen sulfide, sodium sulfide, $S^{2-}$, $Na_2S$, sulfites, $SO2^{-3}$, sodium sulfite, sulfurous acid, sulfur dioxide, thiosulphate, sodium dithionite, sodium bisulfite, $NaHSO_3$, formamidine sulfonic acid, sodium hydroxymethanesulfinate also known as rongalite, thiourea dioxide also known as thiox, sulfonic acid and its derivatives, borohydride salts, sodium hydroxide, sodium carbonate, sodium bicarbonate, sodium oxide, and mixtures of sodium hydroxide and calcium oxide, sulfinic acid derivatives, borohydrides and/or REDULITE GIN or REDULITE RED.

Polar solvent

The polar solvent may enhance the decolorization process. According to a preferred embodiment the polar solvent may be liquid at about 23 °C and may comprises at least one polar solvent or a mixture of polar solvents, wherein the polar solvent is a solvent or solvent mixture having a dipole, and is preferably selected from the group comprising water, and/or at least one polar organic solvent; wherein further preferred the polar solvent is a mixture of liquids forming a homogeneous mixture when added together, for example water/ethanol, wherein also preferred the polar solvent is a mixture - the dye enriches in the water phase and can be separated therefrom by known techniques. Using a polar solvent that is liquid at about 23 °C in the decolorization process may facilitate decolorization since liquid solvents may be easy to handle. Preferably, water may be used. Water may have the advantage that it may be inexpensive and environmentally friendly.

The polar solvent preferably has a dipole moment, more preferably an electric dipole moment. The dipole moments may be due to a non-uniform distribution of positive and negative charges on the various atoms. The polar solvent may have a permanent dipole, an instantaneous dipole and/or an induced dipole. More preferably it may have

a permanent dipole.

It may be advantageous to use a mixture of polar solvents. It may be also possible to use different polar solvents including organic polar solvents that may not form a homogenous mixture. The mixture of solvents can be a homogenous mixture, an emulsion or showing phase separation.

According to the above and according to a preferred embodiment the polar organic solvent or polar organic solvent mixture may be selected from the group $C_1$ to $C_6$ - alcohol, preferably ethanol and isopropanol, glycols such as diethylene glycol and its oligomers and ethers, $C_3$ to $C_6$ - ketone, preferably acetone, $C_2$ to $C_6$ - aldehyde, $C_1$ to $C_6$ - carboxylic acid and their derivatives such as acid chlorides or acid amides, other polar aromatic solvents liquid at 23 °C, preferably dimethylsulfoxide DMSO, dimethylformamide (DMF), benzylic alcohol such as benzyl alcohol, linear or cyclic aliphatic ethers, preferably diethyl ether, tetrahydrofuran, esters such as methyl acetate, ethyl acetate, halogenated solvents such as dichloromethane or trichloromethane.

Levelling agent

With respect to result of the decoloring process it may be advantageous when the decoloring bath further comprises the levelling agent. According to another embodiment the decoloring bath comprises a levelling agent, wherein the levelling agent is preferably selected from the group comprising aromatic esters such as benzoic esters such as benzyl benzoate, phthalic acid esters, polyphenylether, phenoles, aromatic alcohols, aromatic ketones, aryl halides, such as halogenized benzene, halogenzide toluene; N-alkylphthalimide, methylnaphthaline, diphenyle, diphenylethere, naphtholether, and oxybiphenyle. Levelling agents may also be of natural origin such as coumarin or vanillin.

Preferably the levelling agent does not form a homogenous solution with water. The levelling agent may decrease the time that is used for decoloring the granulate and/or powder.

pH

To enhance the decolorization process the polar solvent may be adjusted to a pH in the range of about ≥ 1 to about ≤ 14, preferably about ≥ 4 to about ≤ 10, about ≥ 6 to about ≤ 8, or 7 ± 0.5, wherein the pH is adjusted preferably by adding an acid or basic agent. The pH can be also selected in the range of about ≥ 2.5 to about ≤ 11.5, preferably about ≥ 2.9 to about ≤ 11, about ≥ 3 to about ≤ 9, or about ≥ 5 to about ≤ 10.5. For example, the pH may be adjusted by adding acetic acid as acid agent or sodium hydroxide as basic agent.

Temperature

It may be preferred that the decoloring bath has a temperature adjusted according to specific properties of the colored plastic article and/or the plastic basis material. Preferably, the decoloring bath has a temperature selected ≥ a glass-transition temperature $T_g$ and below a decomposition temperature of the plastic basis material. This may have the advantages that the decoloring of the granulate and/or power is speeded up. Furthermore, in case a solid polar decoloring agent is used, the temperature of the decoloring bath may be selected ≥ the glass-transition temperature $T_g$ and below the decomposition temperature of the solid decoloring agent.

The glass transition temperature $T_g$ may be the gradual and reversible transition in amorphous regions of the plastic basis material and/or the solid polar decoloring agent from a hard and relatively brittle state into a viscous or rubbery state as the temperature is increased. The glass transition temperature $T_g$ of the plastic basis material, the uncolored plastic article and/or the solid polar decoloring agent may be determined by differential scanning calorimetry (DSC), which is a thermoanalytical technique in which the difference in the amount of heat required to increase the temperature of a sample and reference is measured as a function of temperature.

The glass transition temperature $T_g$ of the plastic basis material, the colored plastic article and/or the solid polar decoloring agent may be determined according to the following standards: DIN 51007 (Thermal Analysis - Differential Thermal Analysis and Differential Scanning Calorimetry - General Principles), ASTM E 474, ASTM D 3418, DIN EN ISO 11357-1 (Plastics - Differential Scanning Thermal Analysis Part 1: General principles. (2008)), ISO 11357-2 (Plastics - Differential Scanning Calorimetry Part 2: Determination of the glass transition temperature. (1999)), ISO / DIS 11357-3 (Plastics - Differential Scanning Calorimetry Part 3: Determination of the melting and crystallization temperature and the melting and crystallization enthalpy. (2009)), ISO 11357-4(Plastics - Differential Scanning Thermal Analysis (DSC) Part 4: Determination of specific heat capacity. (2005)).

The glass transition temperature $T_g$ of the plastic basis material, the colored plastic article and/or the solid polar decoloring agent may be determined using a Mettler Toledo DSC 3+ differential calorimeter, a sample amount of 10 +/- 1 mg, nitrogen as purge gas, and the following settings: 1. Heating: -40 °C to 280 °C with 20 °C/min, Hold: 3 minutes at 200 °C, Cooling: 280 °C to -40 °C at 10 °C/min, Hold: 5 minutes at -20 °C, 2. Heating: -40 °C to 300 °C at 20 °C/min.

Time

According to another embodiment the granulates of the colored plastic article are exposed to the decoloring for about ≥ 15 seconds to about ≤ 240 minutes, preferably about ≥ 1 minute to about ≤ 180 minutes, further preferred for about ≥ 5 minutes to about ≤ 60 minutes, and also preferred for about ≥ 10 minutes to about ≤ 20 minutes. However, it is preferred that the granulates, may be exposed to the decoloring bath for about ≥ 1 second to about < 10 minutes, preferably about ≥ 2 seconds to about ≤ 8 minutes, in addition preferred about ≥ 5 seconds to about ≤ 6 minutes, and also preferred about ≥ 10 seconds to about ≤ 4 minutes, or about ≥ 15 seconds to about ≤ 2 minutes.

DETAILED DESCRIPTION OF THE EXAMPLES

The invention will be described in the following with reference to exemplary examples 1 to 6 (1a and 1b to 6a and 6b) and the comparative examples C1 to C6. The comparative examples C1 to C6 correspond in the composition of the plastic article to the exemplary examples 1 to 6, however the second step i.e. exposing the colored surface of the colored plastic article to the ionizing radiation is omitted.

Colors can be described in the RGB or in the Lab color space. In the examples the coloration of the samples is determined in the Lab color space and measured with a Spectrometer Konika-Minolta CM-3600A - according to the guideline of the INSTRUCTION MANUAL CM-3600A (©2011-2013 KONICA MINOLTA, INC.). The Lab color can be converted into the RGB color.

The principle of the RGB color space

This principle is based on the three-color theory. The RGB color space works on the principle of the additive color space. This means that it reproduces the entire color range by mixing the basic colors red, green and blue. The RGB color space can be found in all self-illuminating systems, such as monitors or television screens. All possible colors are defined by their red, green and blue components and mapped accordingly by the overlay of colored light.

The principle of the Lab color space

Unlike the RGB color space, the Lab color space is based on counter-color theory. This is based on the assumption that three separate chemical processes take place in the human retina, which always contain two opposite colors, the two opposite colors striving for balance with one another. An example pair would be the combination of blue and yellow. Lab is used, for example, for photo editing software. While the RGB color space is device-dependent, it is not the Lab color space. RGB includes - regardless of the device - all potentially possible colors, which above all enables the conversion of color definitions from one device to the other.

Convert RGB to Lab

It is important for the conversion that Lab coordinates separate brightness information L from the rest of the color information. RGB images do not have such a separation - a change in brightness therefore changes the entire color information.
Convert sRGB to Lab: http://colormine.org/convert/rgb-to-lab
Conversion Lab to sRGB: http://colormine.org/convert/lab-to-rgb

The Lab - measuring device

The Lab is measured with a - Spectrometer Konika-Minolta CM-3600A - according to the guideline of the INSTRUCTION MANUAL CM-3600A (©2011-2013 KONICA MINOLTA, INC.).

**Example 1a**

In a first step of the method a colored plastic article in the form of a plate W x H x T = 30 x 50 x 2 $mm^3$ is produced by submerging a translucent white (like frosted glass) plate into a coloring bath comprising Bemacron Blau E-FBL corresponding to a dye having the formula A5.

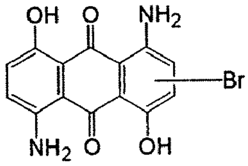

(A5).

A plastic basis material of the translucent plate is a blend of 92 wt.-% high density polyethylene, HDPE (MFI 20 g/10min @ 190°C, 21.6kg) and 8 wt.-% of poly ε-Caprolactone (MFI 2-4 g/10 min (@160°C, 5kg and MW about 80.000). The colored plate is provided by exposing the uncolored plate of the plastic basis material into 800 ml of the coloring bath. The coloring bath is an aqueous solution comprising 8 g of Bemacron Blau E-FBL and 160 ml of Ethanol as solubilizer. The plate is submerged into to the coloring bath for about 60 minutes at a temperature of 80° C and at a pH of 2.9. Thereafter the plate - which is now colored - is removed from the coloring bath and rinsed with water of 30° C at least 3 times to remove color residuals on the surface of the plate. The colored plate comprises in a colored surface a colored layer having a thickness of > 50 μm. In other words, the penetration depth of the dye in the plate is at least 50 μm. The achieved coloration is determined to Lab: 13.3/15.7/-37.2 or converted to RGB: 0/30/87.

Subsequent to the first step, the colored surfaces of both sides of the colored plate are crosslinked by exposing the colored surface of the colored plate to an electron beam of an electron accelerator one after the other under the following conditions:
Radiation dose 150 kGy; acceleration voltage of the electron accelerator 80 kV, air gap between the emitter window and the colored surface of the colored plate 30 mm. An irradiation chamber of the electron accelerator was not evacuated prior to irradiation of the colored surface of the colored plate (no inerting of irradiation chamber). No color change due to ionizing radiation was detected.

**Example 1b**

To determine the effectiveness of the crosslinking with regard to the prevention of migration in the stability tests as well as the decolorability, an identical colored plate as in example 1a is provided in the first step. In a subsequent step, the colored surfaces of both sides of the colored plate are crosslinked by exposing the colored surface of the colored plate to an electron beam of an electron accelerator one after the other under the following conditions:
Radiation dose 50 kGy; acceleration voltage of the electron accelerator 80 kV, air gap between the emitter window and the colored surface of the colored plate 30 mm. An irradiation chamber of the electron accelerator was not evacuated prior to irradiation of the colored surface of the colored plate (no inerting of irradiation chamber). Also, no color change of the colored plate due to ionizing radiation was detected.

**Comparative Example C1 (Comparative Example to 1a and 1b)**

To determine the effectiveness of the crosslinking with regard to the prevention of migration in the stability tests as well as the decolorability, identical reference samples as in examples 1a and 1b are left uncrosslinked.

**Example 2a**

In a first step of the method a colored plastic article in the form of a plate W x H x T = 30 x 50 x 2 $mm^3$ is produced by submerging the translucent white (like frosted glass) plate into a coloring bath comprising a dye having the formula A8.

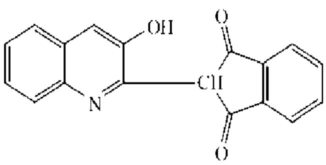

(A8)

The plastic basis material of the plate is a blend of 85 wt.-% HDPE (MFI 20 g/10min @ 190°C, 21.6kg) and 15 wt.-% of a random copolymer of Ethylene and Methyl Acrylate (MA content 19 - 22%, MFI 8 g/10min @ 190°C, 2.16kg). The colored plate is provided by submerging the uncolored plate of the plastic basis material into 800 ml of a coloring bath. The coloring bath is an aqueous solution comprising 8 g of an organic aromatic dye having formula A8, a dispersing agent of 30 g Efka® 4300 (an acrylic block-copolymer) obtainable by BASF SE and 200 ml of a solubilizer of Ethanol.

The plate is submerged into to the coloring bath for about 45 minutes at a temperature of 90° C and at a pH of 3.0. Thereafter the plate - which is now colored - is removed from the coloring bath and rinsed with water of 30° C at least 3 times to remove color residuals of the surface of the plate. The colored plate comprises in a colored surface a colored layer having a thickness of > 50 μm. In other words, the penetration depth of the dye in the plate is at least 50 μm. The achieved coloration is determined to Lab: 84.7/- 3.8/77.6 or converted to RGB: 243/210/46.

Subsequent to the first step, the colored surfaces of both sides of the colored plate are crosslinked one after the other by exposing the colored surface of the plate to an electron beam as ionization radiation under the following conditions:
Radiation dose 200 kGy; acceleration voltage 100 kV, air gap between emitter window and colored surface of colored plate 30 mm, no inerting prior to irradiation. No color change due to ionizing radiation was detected.

**Example 2b**

To determine the effectiveness of the crosslinking with regard to the prevention of migration in the stability tests as well as the decolorability, an identical colored plate as in example 2a is provided in the first step. In a subsequent step, the colored surfaces of both sides of the colored plate are crosslinked by exposing the colored surface of the plate to an electron beam of an electron accelerator one after the other under the following conditions:
Radiation dose 100 kGy; acceleration voltage 80 kV, air gap between emitter window and colored surface of colored plate 30 mm, no inerting prior to irradiation. No color change due to ionizing radiation was detected.

**Comparative Example C2 (Comparative Example to 2a and 2b)**

To determine the effectiveness of the crosslinking with regard to the prevention of migration in the stability tests as well as the decolorability, identical reference samples as in examples 2a and 2b are left uncrosslinked.

**Example 3a**

In a first step of the method a colored plastic article in the form of a plate W x H x T = 30 x 50 x 2 $mm^3$ is produced by submerging the translucent white (like frosted glass) plate into a coloring bath comprising a dye having the formula A6.

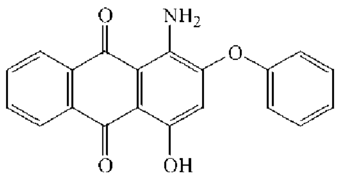

(A6)

The plastic basis material of the plate is a blend of 90 wt.-% HDPE (MFI 20 g/10min @ 190°C, 21.6kg) and 10 wt.-% of a random copolymer of Ethylene and Acrylic Acid (AA content 11%, MFI 1.5g/10min, 190°C, 2.16kg). The colored plate is provided by submerging the uncolored plate of the plastic basis material into 800 ml of a coloring bath. The coloring bath is an aqueous solution comprising 8 g of an organic aromatic dye having formula A6, a dispersing agent of 29 g Efka® PU 4050 (is a modified polyurethane) obtainable by BASF SE and 200 ml of a solubilizer of Ethanol. The plate is submerged into to the coloring bath for about 50 minutes at a temperature of 93 °C and at a pH of 3.8. Thereafter the plate - which is now colored - is removed from the coloring bath and rinsed with water of 30 °C at least 3 times to remove color residuals of the surface of the plate. The colored plate comprises in a colored surface a colored layer having a thickness of > 50 μm. In other words, the penetration depth of the dye in the plate is at least 50 μm. The achieved coloration is determined to Lab: 54.9/68.4/6.7 or converted to RGB: 235/65/123.

Subsequent to the first step, the colored surfaces of both sides of the colored plate are crosslinked one after the other by electron beam as ionization radiation under the following conditions:
Radiation dose 175 kGy; acceleration voltage 150 kV, air gap between emitter window and colored surface of colored plate 30 mm, no inerting prior to irradiation. A slight color change due to ionizing radiation was detected.

**Example 3b**

To determine the effectiveness of the crosslinking with regard to the prevention of migration in the stability tests as well as the decolorability, an identical colored plate as in example 3a is provided in the first step. Subsequent to the first step the colored plates are crosslinked on both sides by electron beam as ionization radiation under the following

conditions:
Radiation dose 80 kGy; acceleration voltage 80 kV, air gap between emitter window and colored surface of colored plate 30 mm, no inerting prior to irradiation. No color change due to ionizing radiation was detected.

**Comparative Example C3 (Comparative Example to 3a and 3b)**

To determine the effectiveness of the crosslinking with regard to the prevention of migration in the stability tests as well as the decolorability, identical reference samples as in examples 3a and 3b are left uncrosslinked.

**Example 4a**

A colored plastic article in the form of a plate W x H x T = 30 x 50 x 1 $mm^3$ is produced in an extruder by an injection molding process by:
mixing a plastic material with a color masterbatch, in a weight ratio of 96:4 (plastic material: color masterbatch)

- wherein the plastic material is PE (Lyondell Basell Hostalen ACP 5831 D)
- wherein the color masterbatch comprises a mixture of the plastic material, ethyl-methacrylat-copolymer (Lotryl 18MA02), acetyltributylcitrate (ATBC) and as dye Disperse Blue 56 (A5) in a weight ratio of 35:60:2.5:2.5.

Subsequent to the first step, the colored surfaces of both sides of the colored plate are crosslinked one after the other by electron beam as ionization radiation under the following conditions:
Radiation dose 175 kGy; acceleration voltage 150 kV, air gap between emitter window and colored surface of colored plate 30 mm, no inerting prior to irradiation. No color change due to ionizing radiation was detected.

**Example 4b**

To determine the effectiveness of the crosslinking with regard to the prevention of migration in the stability tests as well as the decolorability, identical samples as in example 4a are crosslinked by electron beam as ionization radiation under the following conditions:
Radiation dose 80 kGy; acceleration voltage 80 kV, air gap between emitter window and colored surface of colored plate 30 mm, no inerting prior to irradiation. No color change due to ionizing radiation was detected.

**Comparative Example C4 (Comparative Example to 4a and 4b)**

To determine the effectiveness of the crosslinking with regard to the prevention of migration in the stability tests as well as the decolorability, identical reference samples as in examples 4a and 4b are left uncrosslinked.

**Example 5a**

A colored plastic article in the form of a plate W x H x T = 30 x 50 x 1 $mm^3$ is produced in an extruder by an injection molding process by:
mixing a plastic material with a color masterbatch, in a weight ratio of 95:5 (plastic material:

color masterbatch)

- wherein the plastic material is PE (Lyondell Basell Hostalen ACP 5831 D),
- wherein the color masterbatch comprises a mixture of the plastic material, ethyl-methacrylat-copolymer (Lotryl 18MA02), Polysorbat 80 and as dye Bemacron Gelb E-3GL in a weight ratio of 35:60:2.5:2.5.

Subsequent to the first step, the colored surfaces of both sides of the colored plate are crosslinked one after the other by electron beam as ionization radiation under the following conditions:
Radiation dose 200 kGy; acceleration voltage 100 kV, air gap between emitter window and colored surface of colored plate 30 mm, no inerting prior to irradiation. No color change due to ionizing radiation was detected.

**Example 5b**

To determine the effectiveness of the crosslinking with regard to the prevention of migration in the stability tests as well as the decolorability, identical samples as in example 5a are crosslinked by electron beam as ionization radiation

under the following conditions:
Radiation dose 100 kGy; acceleration voltage 80 kV, air gap between emitter window and colored surface of colored plate 30 mm, no inerting prior to irradiation. No color change due to ionizing radiation was detected.

**Comparative Example C5 (Comparative Example to 5a and 5b)**

To determine the effectiveness of the crosslinking with regard to the prevention of migration in the stability tests as well as the decolorability, identical reference samples as in examples 5a and 5b are left uncrosslinked.

**Example 6a**

A colored plastic article in the form of a plate W x H x T = 30 x 50 x 1 $mm^3$ is produced in an extruder by an injection molding process by:
mixing a plastic material with a color masterbatch, in a weight ratio of 96:4 (plastic material: color masterbatch)

- wherein the plastic material is PE (Lyondell Basell Hostalen ACP 5831 D),
- wherein the color masterbatch comprises a mixture of the plastic material, ethyl-methacrylat-copolymer (Lotryl 18MA02), Polysorbat 80 and as dye Disperse Red 60 (A6) in a weight ratio of 35:60:2.5:2.5.

Subsequent to the first step, the colored surfaces of both sides of the colored plate are crosslinked one after the other by electron beam as ionization radiation under the following conditions:
Radiation dose 175 kGy; acceleration voltage 150 kV, air gap between emitter window and colored surface of colored plate 30 mm, no inerting prior to irradiation. A slight color change due to ionizing radiation was detected.

**Example 6b**

To determine the effectiveness of the crosslinking with regard to the prevention of migration in the stability tests as well as the decolorability, identical reference samples as in example 6a are crosslinked by electron beam as ionization radiation under the following conditions:
Radiation dose 80 kGy; acceleration voltage 80 kV, air gap between emitter window and colored surface of colored plate 30 mm, no inerting prior to irradiation. No color change due to ionizing radiation was detected.

**Comparative Example C6 (Comparative Example to 6a and 6b)**

To determine the effectiveness of the crosslinking with regard to the prevention of migration in the stability tests as well as the perfect decolorability, identical reference samples as in examples 6a and 6b are left uncrosslinked.

**Color stability**

The color stability of the plastic articles produced according to the above exemplary examples 1a to 6a and 1b to 6b and comparative examples (C1 to C6) was evaluated by different dye migration tests. The following table 2 summarizes the migration tests (MT) that have been carried out:

Table 2: Migration Tests

| | | Medium/regulation | Temperature | Duration |
|---|---|---|---|---|
| Contact Migration Test | MT 1.1 | PVC | 50 °C | 5 h |
| | MT 1.2 | According to DIN EN ISO 105-E04 | | |
| Extraction Migration Tests | MT 2.1 | Ethanol 95% | 60 °C | 1 h |
| | MT 2.2 | Acetic Acid 3% | 50 °C | 2 h |
| | MT 2.3 | NaOH 2% | 80 °C | 8 h |
| | MT 2.4 | Ethanol 20% and Acetic acid 3% | 50 °C | 24 h |
| | MT 2.5 | According to DIN EN ISO 105-C06 C2S | | |

Contact Migration Test MT 1.1 and MT 1.2

The contact migration test MT 1.1 is performed by means of a perspirometer. The individual test specimens are covered on both sides with monomer-softened white PVC and clamped into the perspirometer separated by acrylic plates. The perspirometer remains in a heating cabinet at 50 °C for 5 hours. After taking out the samples, the evaluation is carried out by visual assessment of the change in color of the soft PVC. The contact migration test MT 1.2 was carried out according to DIN EN ISO 105-E04.

Extraction Migration Test MT 2.1 to 2.5

As described above, the platelets are irradiation crosslinked on both sides successively under the same conditions. The narrow edges (thickness 1 mm) are not crosslinked separately, as it can be assumed that they do not significantly affect the overall result.

For the Extraction Migration Tests MT 2.1 to 2.4 the plastic article was extracted in a round bottom flask with reflux condenser under stirring in the specified medium containing the polar decoloring agent and for the specified time. The plastic article and the polar decoloring agent was then removed from the extraction medium, separated and rinsed under warm water.

The extraction medium, the polar decoloring agent and the plastic article are evaluated visually and/or by measuring the color intensity in comparison before and after. The polar decoloring agent is a poly amide (PA6, melting point 220°C, viscosity number (acc. to ISO307; 96% sulfuric acid) 187 -203 g/cm$^3$; spherical granulate with diameter 2.0 - 2.5mm). The Extraction Migration Test MT 2.5 was carried out according to DIN EN ISO 105-C06 C2S.

The color stability of the plastics articles within the migration tests was assessed by visually comparing the color of the extraction medium and the polar decoloring agent before and after the migration test based on DIN ISO 105 A03 and A02 and/or the percentage loss of color strength K/S according to Kubelca-Munk of the plastic article before and after the migration test.

Color strength according to Kubelca-Munk was measured and calculated by the spectrophotometer Konica-Minolta 3600A at max. absorbance. The remaining color strength is calculated as follows:

$$reamining\ color\ strength = 1 - \frac{(color\ strength\ before - color\ strength\ after)}{color\ strength\ before}\ in\ \%$$

*(before = before decoloring; after = after decoloring and regranulation)*

Visual inspection was performed in a color matching booth under standardized light conditions using a series of platelets, each of which is assigned a level of color.

The assessment of the migration tests was rated by points according to the following Table 3:

Table 3

| Points | Visual inspection of medium | Visual inspection of polar decoloring agent | Remaining color strength of plastic article |
|---|---|---|---|
| 1 | Medium unchanged clear, transparent | Polar decoloring agent unchanged clear, transparent | Plastic article not decolored, remaining color intensity ≥ 90% |
| 2 | Medium weakly colored and color only visible against white background | Polar decoloring agent weakly colored and color only visible against white background | Plastic article decolored, remaining color intensity ≥ 75% and < 90% |
| 3 | Medium recognizable colored | Polar decoloring agent recognizable colored | Plastic article well decolored, remaining colour intensity ≥ 50% and < 75% |
| 4 | Medium well recognizable colored | Polar decoloring agent well recognizable colored | Plastic article very well decolored, remaining colour intensity ≥ 30% and < 50% |

(continued)

| Table 3 | | | |
|---|---|---|---|
| Points | Visual inspection of medium | Visual inspection of polar decoloring agent | Remaining color strength of plastic article |
| 5 | Medium heavily colored | Polar decoloring agent heavily colored | Plastic article highly decolored, remaining colour strength < 30% |

The numbers in the left column are counted as points in the evaluation. The smaller the total number of points, the higher the overall color stability.

As shown in tables 4a and 4b the following results for the color stability of the plastic article have been found:

Table 4a

| | **1a** | **1b** | **C1** | **2a** | **2b** | **C2** | **3a** | **3b** | **C3** |
|---|---|---|---|---|---|---|---|---|---|
| **MT 1.1** | 2 | 2 | 3 | 1 | 2 | 2 | 1 | 2 | 4 |
| **MT 1.2** | 1 | 2 | 3 | 1 | 1 | 3 | 1 | 2 | 3 |
| **MT 2.1** | 2 | 3 | 4 | 2 | 2 | 3 | 2 | 3 | 4 |
| **MT 2.2** | 3 | 3 | 4 | 3 | 3 | 4 | 2 | 3 | 3 |
| **MT 2.3** | 1 | 1 | 1 | 1 | 1 | 1 | 1 | 1 | 1 |
| **MT 2.4** | 2 | 3 | 4 | 2 | 3 | 4 | 2 | 3 | 4 |
| **MT 2.5** | 2 | 4 | 4 | 2 | 3 | 4 | 2 | 3 | 4 |
| **TOTAL** | **13** | **18** | **23** | **12** | **15** | **21** | **11** | **17** | **23** |

Table 4b

| | **4a** | **4b** | **C4** | **5a** | **5b** | **C5** | **6a** | **6b** | **C6** |
|---|---|---|---|---|---|---|---|---|---|
| **MT 1.1** | 1 | 2 | 2 | 1 | 1 | 3 | 1 | 1 | 4 |
| **MT 1.2** | 1 | 2 | 2 | 1 | 1 | 2 | 1 | 2 | 3 |
| **MT 2.1** | 2 | 3 | 4 | 2 | 2 | 3 | 2 | 2 | 3 |
| **MT 2.2** | 2 | 3 | 4 | 2 | 3 | 4 | 2 | 3 | 3 |
| **MT 2.3** | 1 | 1 | 1 | 1 | 1 | 1 | 1 | 1 | 1 |
| **MT 2.4** | 2 | 3 | 4 | 2 | 3 | 4 | 2 | 3 | 4 |
| **MT 2.5** | 2 | 3 | 4 | 2 | 3 | 4 | 2 | 3 | 4 |
| **TOTAL** | **11** | **17** | **21** | **11** | **14** | **21** | **11** | **15** | **22** |
| MT 1.1 - MT 2.5: Assessment of the coloring of the extraction medium and the polar decoloring agent (see table 2 and 3). | | | | | | | | | |

The numbers in the column are counted as points in the evaluation. The lower the total number of points (row TOTAL), the higher the overall color stability (see table 4a and 4b).

**Decoloring of the plastic articles**

The plastic articles produced according to the above exemplary examples 1 to 6 have been decolored according to the method for decoloring using the following decolor conditions.

The remaining dye content after decoloration procedure in the regranulate was determined by measuring the color strength of the regranulate. According to Kubelka-Munk, there is a linear relationship between the color strength

and the dye content or concentration in a plastic. Therefore, a remaining colour strength in percent after decolorisation corresponds to the remaining dye content or the dye concentration after decolorisation.

Decoloring of Example 1a

For the decoloring of the plastic article produced according to example 1a, the plastic article is shredded to flakes having a mean particles size of approximately 5 mm. The flakes are exposed to a decoloring bath. 10 g of shred parts are placed in a pressure reactor containing polar solvent of 800 ml water and a polar organic solvent of 200 ml dimethylformamide (DMF) having a pH of 12 and a temperature of 120 °C. The pH 12 was adjusted by adding NaOH before the shred parts are added to the decoloring bath. 4 g of poly(amidoamine-co-acrylic acid)copolymer in form of particles having a mean particle size diameter of 1 mm to 2 mm was added to the decoloring bath. The reaction mixture was stirred at 120 °C and under the pressure built up in the closed pressure reactor during the reaction time of 60 minutes. Thereafter the pressure inside the reactor was reduced to atmospheric pressure and the shredded polar polymer material was removed from the reactor. The surface of the flakes is slightly blueish - CIELab: 85/-6/-3; RGB: 197/216/218 determined by spectrophotometer.

After drying at 80 °C for 6 h, the granulates are heated to 230 °C, which is above a melting temperature $T_m$ of the plastic basis material, to provide a polymer melt. Subsequently solid parts in the polymer melt are filtered off by a melt filter. Afterwards the polymer is regranulated.

The regranulates show almost the same coloration (Δ(remaining color strength) ≤ 50%) as the regranulate of the non-crosslinked example C1, determined by spectrophotometer. The remaining dye in the decolorized regranulate was less than 5 wt.-%, based on 100 wt.-% of the dye of the colored polymer material before decolorization.

Decoloring of Example 1b

The plates from example 1b were subjected to the same decolorization procedure as example 1a. A slightly lower residual coloration compared to 1a was found - CIELab: 90/-5/-3; RGB: 213/230/232 determined by spectrophotometer.

After drying at 80 °C for 6 h, the granulates are heated to 230 °C, which is above a melting Temperature $T_m$ of the plastic basis material, to provide a polymer melt. Subsequently solid parts in the polymer melt are filtered off by a melt filter and the polymer is regranulated

The regranulates show almost the same coloration (Δ(remaining color strength) ≤ 50%) as the regranulate of the non-crosslinked example C1, determined by spectrophotometer. The remaining dye in the decolorized regranulate was less than 5 wt.-%, based on 100 wt.-% of the dye of the colored polymer material before decolorization.

Decoloring of Example C1

The plates from the comparative example C1 were subjected to the same decolorization procedure as example 1a and 1b including regranulation. A slightly lower residual coloration was found after decoloring - CIELab: 98/-4/-2; RGB: 240/254/255 determined by spectrophotometer..

After drying at 80 °C for 6h, the granulates are heated to 230 °C, which is above a melting Temperature $T_m$ of the plastic basis material, to provide a polymer melt. Subsequently solid parts in the polymer melt are filtered off by a melt filter and the polymer is regranulated. The remaining dye in the decolorized regranulate was less than 5 wt.-%, based on 100 wt.-% of the dye of the colored polymer material before decolorization.

Decoloring of Example 2a

For the decoloring of the plastic article produced according to example 2a, the plastic article is shredded to flakes having a mean particles size of approximately 5 mm. The flakes are exposed to a decoloring bath. 10 g of shred parts are placed in a pressure reactor containing polar solvent of 800 ml water and a polar organic solvent of 200 ml Ethanol having a pH of 9 and a temperature of 110 °C. The pH 9 of the decoloring bath was adjusted by adding NaOH before the shred parts are added. As decoloring agent 3 g of Poly (amidoamine-co-acrylic acid) copolymer in form of particles having a mean particle size diameter of 1 mm to 2 mm and 5 g benzyl benzoate as levelling agent was added to the decoloring bath. The reaction mixture was stirred at 110 °C and under the pressure built up in the closed pressure reactor during the reaction time of 45 minutes. Thereafter the pressure inside the reactor was reduced to atmospheric pressure and the shredded polar polymer material was removed from the reactor. The surface of the flakes is yellowish shimmering - CIELab: 85/-4/35; RGB: 229/213/146 determined by spectrophotometer.

After drying at 80 °C for 6h, the granulates are heated to 230 °C, which is above a melting Temperature $T_m$ of the plastic basis material, to provide a polymer melt. Subsequently solid parts in the polymer melt are filtered off by a

melt filter and the polymer is regranulated.

The regranulates show almost the same coloration (Δ(remaining color strength) ≤ 50%) as the regranulate of the non-crosslinked example C2, determined by spectrophotometer. The remaining dye in the decolorized regranulate was less than 5 wt.-%, based on 100 wt.-% of the dye of the colored polymer material before decolorization.

Decoloring of Example 2b

The plates from example 2b were subjected to the same decolorization procedure as example 2a. A slightly lower residual coloration compared to 2a was found - CIELab: 90/-9/34; RGB: 232/229/160 determined by spectrophotometer.

After drying at 80 °C for 6h, the granulates are heated to 230 °C, which is above a melting Temperature $T_m$ of the plastic basis material, to provide a polymer melt. Subsequently solid parts in the polymer melt are filtered off by a melt filter and the polymer is regranulated.

The regranulates show almost the same coloration (Δ(remaining color strength) ≤ 50%) as the regranulate of the non-crosslinked example C2, determined by spectrophotometer. The remaining dye in the decolorized regranulate was less than 5 wt.-%, based on 100 wt.-% of the dye of the colored polymer material before decolorization.

Decoloring of Example C2

The plates from the comparative example C2 were subjected to the same decolorization procedure as example 2a and 2b including regranulation. A slightly lower residual coloration was found after decoloring - CIELab: 95/-4/23; RGB: 251/241/196 determined by spectrophotometer.

After drying at 80 °C for 6h, the granulates are heated to 230 °C, which is above a melting Temperature $T_m$ of the plastic basis material, to provide a polymer melt. Subsequently solid parts in the polymer melt are filtered off by a melt filter and the polymer is regranulated. The remaining dye in the decolorized regranulate was less than 5 wt.-%, based on 100 wt.-% of the dye of the colored polymer material before decolorization.

Decoloring of Example 3a

For the decoloring of the plastic article produced according to example 3a, the plastic article is shredded to flakes having a mean particles size of approximately 5 mm. The flakes are exposed to a decoloring bath. 10g of shred parts are placed in a pressure reactor containing polar solvent of 800 ml water and a polar organic solvent of 200 ml Ethanol having a pH of 11 and a temperature of 100 °C. The pH 11 of the decoloring bath was adjusted by adding NaOH before the shred parts are added. As decoloring agent 4 g Poly(glycidyl methacrylate) grafted sulfonamide based polystyrene resin with tertiary amine in form of particles having a mean particle size diameter of 1 mm to 2 mm and 4 g benzyl benzoate as levelling agent was added to the decoloring bath. The reaction mixture was stirred at 100 °C and under the pressure built up in the closed pressure reactor during the reaction time of 45 minutes. Thereafter the pressure inside the reactor was reduced to atmospheric pressure and the shredded polar polymer material was removed from the reactor. The shredded polar polymer material after decolorization is slightly reddish shimmering - CIELab: 81/38/7; RGB: 255/174/190 determined by spectrophotometer.

After drying at 80 °C for 6h, the granulates are heated to 230 °C, which is above a melting Temperature $T_m$ of the plastic basis material, to provide a polymer melt. Subsequently solid parts in the polymer melt are filtered off by a melt filter and the polymer is regranulated.

The regranulates show almost the same coloration (Δ(remaining color strength) ≤ 50%) as the regranulate of the non-crosslinked example C3 determined by spectrophotometer. The remaining dye in the decolorized regranulate was less than 5 wt.-%, based on 100 wt.-% of the dye of the colored polymer material before decolorization.

Decoloring of Example 3b

The plates from example 3b were subjected to the same decolorization procedure as example 1a. A slightly lower residual coloration compared to 3a was found - CIELab: 84/37/8; RGB: 255/183/196 determined by spectrophotometer.

After drying at 80 °C for 6h, the granulates are heated to 230 °C, which is above a melting Temperature $T_m$ of the plastic basis material, to provide a polymer melt. Subsequently solid parts in the polymer melt are filtered off by a melt filter and the polymer is regranulated.

The regranulates show almost the same coloration (Δ(remaining color strength) ≤ 50%) as the regranulate of the non-crosslinked example C3 determined by spectrophotometer. The remaining dye in the decolorized regranulate was less than 5 wt.-%, based on 100 wt.-% of the dye of the colored polymer material before decolorization.

Decoloring of Example C3

The plates from the comparative example C3 were subjected to the same decolorization procedure as example 3a and 3b including regranulation. A slightly lower residual coloration was found after decoloring - CIELab: 85/35/7; RGB: 255/187/201 determined by spectrophotometer.

After drying at 80 °C for 6h, the granulates are heated to 230 °C, which is above a melting Temperature Tm of the plastic basis material, to provide a polymer melt. Subsequently solid parts in the polymer melt are filtered off by a melt filter and the polymer is regranulated. The remaining dye in the decolorized regranulate was less than 5 wt.-%, based on 100 wt.-% of the dye of the colored polymer material before decolorization.

Decoloring of Example 4a

For the decoloring of the plastic article produced according to example 4a, the plastic article is shredded to a fine granulate having a mean particles size of approximately 2 mm. The granulate is exposed to a decoloring bath. The decoloring bath is a solution of 4 mL/L of a benzyl benzoate as levelling agent, 5 g/L formamidine sulfonic acid as reduction agent and 10 mL/L caustic soda lye (NaOH) 38°Bé in water for 60 min at 130 °C (heating rate 2 °C/min). The concentration of NaOH in the water is 0,11 mol/L and the pH is > 7. The ratio is 10 g granulates per 100g decoloring bath. After rapid cooling, the granulates are filtered off with a coarse sieve and thoroughly rinsed with running water.

The cross-section of the granulates shows a color gradient from the outside to the inside, i.e. the (former) surface of the granulates is even more strongly decolored than the inner area of the granulates. The surface of the granulates is bluish - CIELab: 65/10/-36; RGB: 137/155/222 determined by spectrophotometer.

After drying at 80 °C for 6 h, the granulates are heated to 230 °C, which is above a melting Temperature $T_m$ of the plastic basis material, to provide a polymer melt. Subsequently solid parts in the polymer melt are filtered off by a melt filter and the polymer is regranulated.

The regranulates show almost the same coloration ($\Delta$(remaining color strength) $\leq$ 50%) as the regranulate of the non-crosslinked example C4 determined by spectrophotometer. The remaining dye in the decolorized regranulate was less than 10 wt.-%, based on 100 wt.-% of the dye of the colored polymer material before decolorization.

Decoloring of Example 4b

The plates from example 4b were subjected to the same decolorization procedure as example 4a. A slightly lower residual coloration compared to 4a was found - CIELab: 90/-5/-3; RGB: 181/195/255 determined by spectrophotometer.

After drying at 80 °C for 6 h, the granulates are heated to 230 °C, which is above a melting Temperature $T_m$ of the plastic basis material, to provide a polymer melt. Subsequently solid parts in the polymer melt are filtered off by a melt filter and the polymer is regranulated.

The regranulates show almost the same coloration ($\Delta$(remaining color strength) $\leq$ 50%) as the regranulate of the non-crosslinked example C4. The remaining dye in the decolorized regranulate was less than 10 wt.-%, based on 100 wt.-% of the dye of the colored polymer material before decolorization.

Decoloring of Example C4

The plates from the comparative example C4 were subjected to the same decolorization procedure as example 4a and 4b including regranulation. A slightly lower residual coloration was found after decoloring - CIELab: 85/10/-26; RGB: 206/208/255, determined by spectrophotometer.

After drying at 80 °C for 6h, the granulates are heated to 230 °C, which is above a melting Temperature $T_m$ of the plastic basis material, to provide a polymer melt. Subsequently solid parts in the polymer melt are filtered off by a melt filter and the polymer is regranulated. The remaining dye in the decolorized regranulate was less than 10 wt.-%, based on 100 wt.-% of the dye of the colored polymer material before decolorization.

Decoloring of Example 5a

For the decoloring of the plastic article produced according to example 5a, the plastic article is shredded to a fine granulate having a mean particles size of approximately 2 mm. The granulate is exposed to a decoloring bath. The decoloring bath is a solution of 4 mL/L of a benzyl benzoate as levelling agent, 5 g/L formamidine sulfonic acid as reduction agent and 10 mL/L caustic soda lye (NaOH) 38°Bé in water for 60 min at 130 °C (heating rate 2 °C/min). The concentration of NaOH in the water is 0.11 mol/L and the pH is > 7. The ratio is 10 g granulates per 100g decoloring bath. After rapid cooling, the granulates are filtered off with a coarse sieve and thoroughly rinsed with running water.

The cross-section of the granulates shows a color gradient from the outside to the inside, i.e. the (former) surface of the granulates is even more strongly decolored than the inner area of the granulates. The surface of the granulates is yellowish - CIELab: 80/0/60; RGB: 230/195/82, determined by spectrophotometer.

After drying at 80 °C for 6h, the granulates are heated to 230 °C, which is above a melting Temperature $T_m$ of the plastic basis material, to provide a polymer melt. Subsequently solid parts in the polymer melt are filtered off by a melt filter and the polymer is regranulated.

The regranulates show almost the same coloration (Δ(remaining color strength) ≤ 50%) as the regranulate of the non-crosslinked example C5, determined by spectrophotometer. The remaining dye in the decolorized regranulate was less than 10 wt.-%, based on 100 wt.-% of the dye of the colored polymer material before decolorization.

Decoloring of Example 5b

The plates from example 5b were subjected to the same decolorization procedure as example 5a. A slightly lower residual coloration compared to 4a was found - CIELab: 85/1/50; RGB: 244/209/116, determined by spectrophotometer.

After drying at 80 °C for 6 h, the granulates are heated to 230 °C, which is above a melting Temperature $T_m$ of the plastic basis material, to provide a polymer melt. Subsequently solid parts in the polymer melt are filtered off by a melt filter and the polymer is regranulated.

The regranulates show almost the same coloration (Δ(remaining color strength) ≤ 50%) as the regranulate of the non-crosslinked example C5, determined by spectrophotometer. The remaining dye in the decolorized regranulate was less than 10 wt.-%, based on 100 wt.-% of the dye of the colored polymer material before decolorization.

Decoloring of Example C5

The plates from the comparative example C5 were subjected to the same decolorization procedure as example 5a and 5b including regranulation. A slightly lower residual coloration was found after decoloring - CIELab: 87/0/40; RGB: 244/216/142, determined by spectrophotometer.

After drying at 80 °C for 6 h, the granulates are heated to 230 °C, which is above a melting Temperature $T_m$ of the plastic basis material, to provide a polymer melt. Subsequently solid parts in the polymer melt are filtered off by a melt filter and the polymer is regranulated. The remaining dye in the decolorized regranulate was less than 10 wt.-%, based on 100 wt.-% of the dye of the colored polymer material before decolorization.

Decoloring of Example 6a

For the decoloring of the plastic article produced according to example 6a, the plastic article is shredded to a fine granulate having a mean particles size of approximately 2 mm. The granulate is exposed to a decoloring bath. The decoloring bath is a solution of 4 mL/L of a benzyl benzoate as levelling agent, 5 g/L formamidine sulfonic acid as reduction agent and 10 mL/L caustic soda lye (NaOH) 38°Bé in water for 60 min at 130 °C (heating rate 2 °C/min). The concentration of NaOH in the water is 0.11 mol/L and the pH is > 7. The ratio is 10 g granulates per 100g decoloring bath. After rapid cooling, the granulates are filtered off with a coarse sieve and thoroughly rinsed with running water.

The cross-section of the granulates shows a color gradient from the outside to the inside, i.e. the (former) surface of the granulates is even more strongly decolored than the inner area of the granulates. The surface of the granulates is reddish - CIELab: 62/33/2; RGB: 206/127/147, determined by spectrophotometer.

After drying at 80 °C for 6 h, the granulates are heated to 230 °C, which is above a melting Temperature $T_m$ of the plastic basis material, to provide a polymer melt. Subsequently solid parts in the polymer melt are filtered off by a melt filter and the polymer is regranulated.

The regranulates show almost the same coloration (Δ(remaining color strength) ≤ 50 %) as the regranulate of the non-crosslinked example C6, determined by spectrophotometer. The remaining dye in the decolorized regranulate was less than 10 wt.-%, based on 100 wt.-% of the dye of the colored polymer material before decolorization.

Decoloring of Example 6b

The plates from example 6b were subjected to the same decolorization procedure as example 6a. A slightly lower residual coloration compared to 6a was found - CIELab: 72/27/4; RGB: 227/158/168, determined by spectrophotometer.

After drying at 80 °C for 6h, the granulates are heated to 230 °C, which is above a melting Temperature $T_m$ of the plastic basis material, to provide a polymer melt. Subsequently solid parts in the polymer melt are filtered off by a melt filter and the polymer is regranulated.

The regranulates show almost the same coloration (Δ(remaining color strength) ≤ 50%) as the regranulate of the non-crosslinked example C6, determined by spectrophotometer. The remaining dye in the decolorized regranulate was less than 10 wt.-%, based on 100 wt.-% of the dye of the colored polymer material before decolorization.

Decoloring of Example C6

The plates from the comparative example C6 were subjected to the same decolorization procedure as example 6a and 6b including regranulation. A slightly lower residual coloration was found after decoloring - CIELab: 81/25/3; RGB: 246/184/196, determined by spectrophotometer.

After drying at 80 °C for 6h, the granulates are heated to 230 °C, which is above a melting Temperature $T_m$ of the plastic basis material, to provide a polymer melt. Subsequently solid parts in the polymer melt are filtered off by a melt filter and the polymer is regranulated. The remaining dye in the decolorized regranulate was less than 10 wt.-%, based on 100 wt.-% of the dye of the colored polymer material before decolorization.

The decolorability of the plastic articles was assessed by measuring the percentage loss of color strength K/S according to Kubelca-Munk of the colored plates (colored either by a coloring bath or a color materbatch) comparing this value with the color strength of plastic articles produced from the filtered polymer melt after decolorization and regranulation. Color strength according to Kubelca-Munk was measured and calculated by the spectrophotometer Konica-Minolta 3600A at max. adsorbance. The remaining color strength is calculated as follows:

$$reamining\ color\ strength = 1 - \frac{(color\ strength\ before - color\ strength\ after)}{color\ strength\ before}\ in\ \%$$

*(before = before decoloring; after = after decoloring and regranulation)*

According to Kubelka-Munk, there is a linear relationship between the color strength and the dye content or concentration in a plastic. Therefore, the remaining colour strength in percent after decolorisation corresponds to the remaining dye content or the dye concentration after decolorisation.

As shown in table 5 the following results for the decoloring of the plastic article have been found:

**Table 5**

| Example | 1a | 1b | C1 | 2a | 2b | C2 | 3a | 3b | C3 |
|---|---|---|---|---|---|---|---|---|---|
| Remaining K/S | 3% | 3% | 2% | 5% | 4% | 3% | 4% | 4% | 3% |
| Example | 4a | 4b | C4 | 5a | 5b | C5 | 6a | 6b | C6 |
| Remaining K/S | 5% | 4% | 4% | 6% | 6% | 5% | 5% | 4% | 4% |

As the results clearly show, the overall color stability of the plastic article is enhanced by exposing the plastic article to the ionizing radiation without affecting the decolorability of the plastic article.

## Claims

**1.** Method for stabilizing a dye in a colored plastic article, wherein the method comprises the steps:

a) providing the colored plastic article by

i) exposing a surface of an uncolored plastic article to a coloring bath comprising the dye or
ii) by using a color masterbatch or liquid color comprising the dye in a plastic forming process

wherein the colored plastic article comprises a plastic basis material, and the dye,

- wherein the plastic basis material is based on a polar polymer or on a polymer blend, wherein the polymer blend comprises at least 0.25 wt.-% of the polar polymer, wherein the polar polymer has a molecular weight Mw ≥ 1000 g/mol and has at least 5 wt.-% of heteroatoms based on the molecular weight of the polar polymer, and wherein heteroatoms are any atoms except C and H atoms; or

- wherein the plastic basis material is based on a further polymer blend, wherein the further polymer blend comprises at least 99.75 wt.-% of a non-polar polymer and a carrier;
wherein the non-polar polymer has a molecular weight Mw ≥ 1000 g/mol and has less than 5 wt.-% of heteroatoms based on the molecular weight of the non-polar polymer;
wherein the carrier is a polar compound or a blend comprising at least 10 wt.-% of a polar-compound, and wherein the polar-compound has a molecular weight Mw < 1000 g/mol and has at least 5 wt.-% of heteroatoms based on the molecular weight of the polar compound;
- wherein the dye has a molecular weight Mw in the range of about ≥ 250 g/mol to about ≤ 750 g/mol;

b) exposing a colored surface of the colored plastic article to ionizing radiation, such that a depth-dose distribution in the colored surface comprises a maximum radiation dose at a depth of > 0 μm to ≤ 10 μm of the colored surface.

**2.** The method according to claim 1, wherein the plastic basis material is a thermoplastic and/or a thermoplastic elastomer.

**3.** The method according to any one of claims 1 to 2, wherein the plastic basis material comprises a crosslinking-agent, wherein the crosslinking-agent is selected from the group of:

- poly-functional monomers, preferably from trimethylolpropane triacrylate (TMPTA), trimethylolmethane tetraacrylate (TMMT), trimethylolpropane trimethacrylat (TMPTMA) tripropyleneglycol diacrylate (TPGDA), m-phenylene bismaleimide (PhDMI) and mixtures thereof; and/or
- substituted triazines, preferably from triallyl cyanurate, triallyl isocyanurate, trimercaptro triazine, and/or mixtures thereof; and/or
- crosslinikg-agents of the lactam, ether, polyalkylene glycol, polyamide, polyamidoamine, polyamine, polyester, polyester alcohol, polyurethane and polyurea type.

**4.** The method according to any one of claims 1 to 3, wherein the plastic basis material comprises the crosslinking-agent in an amount of 0.3 % to 6 %, preferably 0.6 % to 3.6%, more preferably 1.2 % to 3 % based on the weight of the plastic basis material.

**5.** The method according to any one of claims 1 to 4, wherein in step b) the ionizing radiation is an electron beam, beta radiation and/or gamma radiation.

**6.** The method according to any one of claims 1 to 5, wherein in step b) the ionizing radiation is an electron beam generated by an electron accelerator and a radiation dose is 10 kGy to 300 kGy, preferably 50 kGy to 250 kGy, and more preferably 80 kGy to 150 kGy.

**7.** The method according to any one of claims 1 to 6, wherein in step b) the ionizing radiation is an electron beam generated by an electron accelerator and a distance between an emitter window of the electron accelerator and the colored surface of the colored plastic article is 10 mm to 750 mm, preferably 20 mm to 50 mm, and more preferably 30 mm to 45 mm.

**8.** The method according to any one of claims 1 to 7, wherein in step b) the ionizing radiation is an electron beam generated by an electron accelerator and an acceleration voltage of the electron accelerator is 25 kV to 250 kV, preferably 50 kV to 175 kV, and more preferably 80 kV to 120 kV.

**9.** The method according to any one of claims 1 to 8, wherein in step b) the colored surface of the colored plastic article is exposed to the ionizing radiation by passing the colored plastic article on a conveyer trough the ionizing radiation.

**10.** The method according to claim 9, wherein the colored plastic article on the conveyor has a speed of 0.5 m/min to 60 m/min, preferably of 1 m/min to 50 m/min, more preferably of 5 m/min to 25 m/min.

**11.** The method according to any one of claims 1 to 10, wherein in step b) the colored surface of the colored plastic article is exposed to the ionizing radiation in an irradiation chamber, and the irradiation chamber is not evacuated prior to irradiation.

**12.** The method according to any one of claims 1 to 11, wherein the dye has a molecular weight Mw in the range of about ≥ 250 g/mol to about ≤ 750 g/mol, preferably the dye has a molecular weight Mw in the range of about ≥ 270

g/mol to about ≤ 450 g/mol, and more preferably the dye has a molecular weight Mw in the range of about ≥ 285 g/mol to about ≤ 400 g/mol.

**13.** The method according to any one of claims 1 to 12, wherein the dye is selected from the group comprising phthalocyanine, polymethine, anthraquinone, indanthrone, monoazo, diazo, methine, quinophthalone, perinone, naphthalidimide indigo and thioindigo dyes.

**14.** The method according to any one of claims 1 to 13, wherein the colored plastic article is provided by i) exposing the surface of the uncolored plastic article to the coloring bath, wherein the coloring bath is an aqueous dispersed solution and comprises

- the dye having a molecular weight Mw in the range of about ≥ 250 g/mol to about ≤ 750 g/mol,
- at least one dispersing agent for dispersing the dye in the aqueous solution, and
- optionally at least one solubilizer, and
- optionally at least one levelling agent,

wherein the coloring bath has a temperature in the range of about ≥ 30 °C to about ≤ 150 °C and optionally a pH in the range of about ≥ 2.5 and < 7, and wherein the dispersing agent is selected different from the solubilizer and/or the levelling agent.

**15.** The method according to any one of claims 1 to 13, wherein the colored plastic article is provided by i) exposing the surface of the uncolored plastic article to the coloring bath, wherein the coloring bath is an aqueous solution and comprises

- the dye having a molecular weight Mw in the range of about ≥ 250 g/mol to about ≤ 750 g/mol,
- optionally at least one solubilizer, and
- optionally at least one levelling agent,

wherein the coloring bath has a temperature in the range of about ≥ 30 °C to about ≤ 150 °C and optionally a pH in the range of about ≥ 2.5 and < 7, and wherein the solubilizer is selected different from the and the levelling agent.

**16.** The method according to claim 14 or 15, wherein the surface of the uncolored plastic article is exposed to the coloring bath for about ≥ 1 second to about ≤ 60 minutes, preferably about ≥ 3 seconds to about ≤ 30 minutes, more preferably about ≥ 5 seconds to about ≤ 10 minutes.

**17.** The method according to claim 14 or 16, wherein the dispersing agent is selected from the group comprising at least one:

- anionic tenside, preferably selected from polyphosphates, polyacrylates, aromatic sulfonates, esters with ethoxylate groups, esters with sulfonate groups, fatty acid-based polymers with an anionic group, salts of polycarboxylic acids, ethoxylates, thiourea dioxide;
- cationic tenside, preferably selected from quaternary ammonium compounds, fatty acid-polymers with a cationic group per molecule;
- non-ionic tenside, preferably selected from aromatic esters and hydrocarbons, aromatic and non-aromatic carboxylic acid esters, ethyl acrylate, fatty acid esters, ethoxylated fatty acid, polymers that are fatty acid-based with a non-ionic group per molecule, acrylate-copolymers, acrylate/styrene copolymers, fatty acid derivatives, polyalkoxylate;
- polyurethane (PUR) polymers and/or polyacrylate polymers, preferably linear or branched polyurethane (PUR) polymers and/or polyacrylate polymers, more preferred the polyurethane (PUR) polymer and/or polyacrylate polymer have a MW of 5000 to 30000 g/mol.

**18.** The method according to any of claims 14 to 17, wherein the solubilizer is soluble at 23° C in the coloring bath and selected from the group comprising a $C_1$ to $C_6$ alcohol, $C_2$ to $C_{20}$ organic acid, $c_3$ to $C_6$ ketone, $C_3$ to $C_5$ aldehyde, $C_1$ to $C_6$ alkyl, $C_3$ to $C_6$ ester, alkylene glycol alkyl ether, glycol alkyl ether,; preferably glycol and glycol oligomers, ethanol, acetone, formic or acetic acid, dimethylformamide or dimethylsulfoxide.

**19.** The method according to any of the claims 14 to 18, wherein the coloring bath has a temperature higher than a glass-transition temperature $T_g$ of the uncolored plastic article and preferably of the plastic basis material; and/or

the coloring bath has a temperature lower than a heat deflection temperature of the uncolored plastic article and preferably of the plastic basis material.

**20.** Colored plastic article produced by a method according to any one of claims 1 to 19.

**21.** Colored plastic article according to claim 20, wherein the plastic article comprises in a surface layer having a thickness of 2 $\mu$m to 10 $\mu$m a degree of crosslinking of 10% to 85%, preferably of 50% to 85%, more preferably of 65% to 85%, wherein the degree of crosslinking is determined by a swelling test, according to ASTM D2765, ASTM F2214, ISO 10147, and/or DIN 16892.

**22.** Colored plastic article according to claim 20 or 21, wherein the plastic article is produced according to a method of claims 14 to 19 and wherein the plastic article comprises in the colored surface a colored layer having a thickness of > 5 $\mu$m, preferably > 10 $\mu$m, more preferably > 50 $\mu$m.

**23.** Colored plastic article according to any of claims 20 to 22, wherein the colored surface of the plastic article is color stable under any or any combination of the following conditions:

- exposure to water for 12h at 65°C;
- exposure to a 2% alkaline solution of NaOH for 8 h at 80 °C;
- exposure to a 3% acid solution of acetic acid for 2 h at 50 °C;
- fastness to washing according to DIN EN ISO 105-C06 C2S;
- fastness to perspiration according to DIN EN ISO 105-E04;
- exposure to a solution of 20% ethanol and 3% acetic acid in water for 24 h at 50 °C.

**24.** Colored plastic article according to any one of claims 20 to 22, wherein the colored surface of the plastic article is color stable under the food safety requirements defined by any or any combination of the following norms: DIN 16524-2, CEI 05-59; DIN 16524-1 to DIN 16524-3, JN 16-80; DIN 10955; DIN 16524-3, CEI 11-60; DIN 16524-3, CEI 08-60; CEI 20-80; JN 17-80; DIN 16525, CEI 19-79; DIN 16524-1; DIN 53415; DIN 16524-3, CEI 10-60; DIN 53375; CEI 18-77; DIN 16524-2, CEI 06-59; DIN 16524-3, CEI 09-60; DIN 53415; DIN 16524-2, CEI 07-59; and DIN 16524-1, CEI 03-59.

**25.** Colored plastic article according to any one of claims 20 to 24, wherein the plastic article is selected from the group comprising a sheet, a foil, a container, a part, a tube, a profile, a nonwoven fabric, and preferably the article is selected from the group comprising rigid packaging such as bottles or jars, color coded packaging and containers of all types, including ones for industrial components, computer face-plates, keyboards, bezels and cellular phones, residential and commercial lighting fixtures and components therefor, such as sheets, used in building and in construction, tableware, including plates, cups and eating utensils, small appliances and their components, optical and sun-wear lenses, as well as decorative films including such films that are intended for use in film insert molding.

**26.** Method for decolorizing a colored plastic article according to any of claims 20 to 25, comprising the steps of

- shredding the colored plastic article to a granulate and/or powder,
- exposing the granulate and/or powder to a decoloring bath for at least partial decoloration,
- heating the at least partly decolored granulate and/or powder above a melting temperature $T_m$ of the plastic basis material for providing a polymer melt, and
- filtering off solid parts in the polymer melt by a melt filter.

**27.** Method according to claim 26, wherein the colored plastic article is shredded to a granulate and/or powder having a mean particle size of 0.1 mm to 40 mm, preferably 0.2 mm to 20 mm, more preferably 0.25 mm to 15 mm.

**28.** Method according to any of claims 26 or 27, wherein at least some of the solid parts are at least partly colored.

**29.** Method according to any of claims 26 to 28, wherein the decoloring bath comprises a polar solvent and optionally a levelling agent, wherein the polar solvent comprises and/or is exposed to at least one polar decoloring agent for desorption of the dye and absorbing and/or adsorbing the dye from the granulate;
and/or the decoloring bath comprises a polar solvent and optionally a levelling agent, wherein the polar solvent comprises and/or is exposed to an oxidizing or reducing agent.

**30.** Method according to any of claims 26 to 29, wherein the temperature of the decoloring bath is selected ≥ a glass-transition temperature $T_g$ and below a decomposition temperature of the plastic basis material, preferably the temperature of the polar solvent is selected > $T_g$ and ≤ the melting temperature $T_m$ of the plastic basis material.

**31.** The method according to any of claims 26 to 30, wherein the granulates are exposed to the decoloring bath for about ≥ 15 seconds to about ≤ 240 minutes, preferably about ≥ 1 minute to about ≤ 180 minutes, further preferred for about ≥ 5 minutes to about ≤ 60 minutes, and also preferred for about ≥ 10 minutes to about ≤ 20 minutes.

**32.** The method according to any of claims 29 or 30, wherein the polar solvent is liquid at about 23 °C and comprises at least one polar solvent or a mixture of polar solvents, wherein the polar solvent is a solvent or solvent mixture having a dipole, and is preferably selected from the group comprising water, and/or at least one polar organic solvent; wherein further preferred the polar solvent is a mixture of liquids forming a homogeneous mixture when added together.

**33.** The method according to claim 32, wherein the polar organic solvent or polar organic solvent mixture is selected from the group $C_1$ to $C_6$ - alcohol, preferably ethanol and isopropanol, glycols such as diethylene glycol and its oligomers, $C_3$ to $C_6$ - ketone, preferably acetone, $C_2$ to $C_6$ - aldehyde, $C_1$ to $C_6$ - carboxylic acid and their derivatives such as acid chlorides or acid amides, other polar aromatic solvents liquid at 23 °C, preferably DMSO, DMF, benzylic alcohol, linear or cyclic aliphatic ethers, preferably diethyl ether or tetrahydrofuran, esters such as ethyl acetate, halogenated solvents such as dichloromethane or trichloromethane.

**34.** The method according to any of claims 29 to 33, wherein the polar solvent is adjusted to a pH in the range of about ≥ 1 to about ≤ 14, preferably about ≥ 4 to about ≤ 10, about ≥ 6 to about ≤ 8, or 7 ± 0.5, wherein the pH is adjusted preferably by adding an acid or basic agent.

**35.** The method according to any of claims 14, 15 or 29, wherein the levelling agent is selected from the group comprising aromatic esters such as benzyl benzoat or phthalic acid esters, polyphenylether, phenoles, aromatic alcohols, aromatic ketones, aryl halides, such as halogenized benzene, halogenzide toluene; N-alkylphthalimide, methylnaphthaline, diphenyle, diphenylethere, naphtholether, and oxybiphenyle.

Europäisches Patentamt
European Patent Office
Office européen des brevets

# EUROPEAN SEARCH REPORT

Application Number
EP 20 21 7673

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | JP H04 34083 A (TORAY INDUSTRIES)<br>5 February 1992 (1992-02-05)<br>* abstract; examples 28-33 *<br>----- | 1-25,35<br>26-34 | INV.<br>C08J7/12<br>D06P5/20<br>B29B17/02<br>C08J11/04 |
| A | DATABASE WPI<br>Week 198330<br>Thomson Scientific, London, GB;<br>AN 1983-721236<br>XP002803350,<br>& SU 958 552 A (AS BELO PHYS INST)<br>15 September 1982 (1982-09-15)<br>* abstract *<br>----- | 1-35 | |
| A | DATABASE WPI<br>Week 199615<br>Thomson Scientific, London, GB;<br>AN 1996-141841<br>XP002803351,<br>& JP H06 2266 A (FEMTRON KK)<br>11 January 1994 (1994-01-11)<br>* abstract *<br>----- | 1-35 | TECHNICAL FIELDS SEARCHED (IPC) |
| A | US 2014/088210 A1 (YORDE RICHARD [US] ET AL) 27 March 2014 (2014-03-27)<br>* claim 1 *<br>----- | 1-35 | C08J<br>B29B<br>C09J<br>D06P |

The present search report has been drawn up for all claims

2

| Place of search | Date of completion of the search | Examiner |
|---|---|---|
| Munich | 16 June 2021 | Pamies Olle, Silvia |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

# ANNEX TO THE EUROPEAN SEARCH REPORT ON EUROPEAN PATENT APPLICATION NO. EP 20 21 7673

This annex lists the patent family members relating to the patent documents cited in the above-mentioned European search report.
The members are as contained in the European Patent Office EDP file on
The European Patent Office is in no way liable for these particulars which are merely given for the purpose of information.

16-06-2021

| Patent document cited in search report | | Publication date | Patent family member(s) | | Publication date |
|---|---|---|---|---|---|
| JP H0434083 | A | 05-02-1992 | JP | H089832 B2 | 31-01-1996 |
| | | | JP | H0434083 A | 05-02-1992 |
| SU 958552 | A | 15-09-1982 | NONE | | |
| JP H062266 | A | 11-01-1994 | NONE | | |
| US 2014088210 | A1 | 27-03-2014 | US | 2014088210 A1 | 27-03-2014 |
| | | | US | 2016264751 A1 | 15-09-2016 |
| | | | WO | 2014047620 A1 | 27-03-2014 |

EPO FORM P0459

For more details about this annex : see Official Journal of the European Patent Office, No. 12/82